# EUROPEAN PATENT APPLICATION

(11) **EP 4 819 670 A1**
(43) Date of publication of application: **07.10.2026**
(21) Application number: 24905870.2
(22) Date of filing: 01.11.2024
(51) Int. Cl.: H04W 24/02

(54) **COMMUNICATION METHOD AND APPARATUS**

(30) Priority: 21.12.2023 CN 202311780601
(71) Applicant: Huawei Technologies Co., Ltd., Shenzhen, Guangdong 518129 (CN)
(72) Inventor: WANG, Shihao, Shenzhen, Guangdong 518129 (CN); HUANG, Xietian, Shenzhen, Guangdong 518129 (CN); LI, Xianming, Shenzhen, Guangdong 518129 (CN)
(74) Representative: Pfenning, Meinig & Partner mbB
(86) International application number: PCT/CN2024/129411
(87) International publication number: WO 2025/130382

(57) **Abstract**

This application provides a communication method and apparatus, pertaining to the field of communication technologies, to improve intent execution efficiency and reduce resource overhead. In the method, a first device may send, to a second device based on a first request message, first information and a plurality of identifiers in a one-to-one correspondence with the plurality of intent solutions, where the first information includes whether an estimated intent expectation during execution of each of a plurality of intent solutions used to implement a first intent instance satisfies each of at least one intent expectation. The second device may determine, from the plurality of intent solutions based on the first information and the plurality of identifiers, an intent solution to be executed, and feed back a corresponding first identifier. In this way, the first device may directly determine, based on the first identifier, the intent solution to be executed, without adjusting the intent execution solution multiple times to fulfill each of the at least one intent expectation, thereby improving intent execution efficiency and reducing resource overhead.

## Description

This application claims priority to Chinese Patent Application No. 202311780601.4, filed with the China National Intellectual Property Administration on December 21, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, a management service consumer (management service consumer, MnS Consumer) may deliver an intent to a management service producer (MnS Producer) by invoking an intent-driven management service interface. The MnS producer may translate the intent into a specific execution policy or an intent execution solution. The execution solution is used to implement the intent. The MnS producer delivers the execution solution to the network infrastructure and continuously monitors the network status during intent execution to ensure fulfillment of the intent. When the intent delivered by the MnS consumer includes a plurality of intent expectations, the MnS producer may need to adjust the intent execution solution multiple times to fulfill all of the intent expectations.

However, when the MnS producer adjusts the intent execution solution multiple times to fulfill the plurality of intent expectations, intent execution efficiency may decrease, and resource overhead may increase.

### SUMMARY

Embodiments of this application provide a communication method and apparatus to improve intent execution efficiency and reduce resource overhead.

To achieve the foregoing objective, this application uses the following technical solutions.

According to a first aspect, a communication method is provided. The method may be performed by a first device, may be performed by a chip or a circuit configured in the first device, or may be performed by a logical module or software that can implement all or some functions of the first device. The method includes: The first device receives a first request message from a second device, sends first information and a plurality of identifiers to the second device, and receives a first identifier from the second device. The first request message is used to request to create a first intent instance, and the first intent instance includes at least one intent expectation. The first information indicates whether an estimated intent expectation during execution of each of the plurality of intent solutions satisfies each of the at least one intent expectation, and the plurality of intent solutions are used to implement the first intent instance. The plurality of identifiers are in a one-to-one correspondence with the plurality of intent solutions. The first identifier indicates an intent solution to be executed, and the first identifier is one of the plurality of identifiers.

It can be learned from the method in the first aspect and the following second aspect that, a first device may send, to a second device based on a first request message, first information and a plurality of identifiers in a one-to-one correspondence with the plurality of intent solutions, where the first information includes whether an estimated intent expectation during execution of each of a plurality of intent solutions used to implement a first intent instance satisfies each of at least one intent expectation. The second device may determine, from the plurality of intent solutions based on the first information and the plurality of identifiers, an intent solution to be executed, and feed back a corresponding first identifier. In this way, the first device may directly determine, based on the first identifier, the intent solution to be executed, without adjusting the intent execution solution multiple times to fulfill each of the at least one intent expectation, thereby improving intent execution efficiency and reducing resource overhead.

In a possible design solution, the first information includes first indication information and/or an expected value list. The first indication information indicates whether the estimated intent expectation during execution of each of the plurality of intent solutions satisfies each of the at least one intent expectation, and the expected value list indicates an expected target value of the estimated intent expectation during execution of each of the plurality of intent solutions. In this way, the second device may directly determine, based on the first information, whether the estimated intent expectation during execution of each intent solution satisfies each of the at least one intent expectation, and estimate the expected target value of the intent expectation, so that the second device subsequently selects the intent solution to be executed, thereby improving accuracy of the selected intent solution to be executed.

Optionally, the first information further includes resource information and/or time information. The resource information indicates a quantity of resources used to complete each of the plurality of intent solutions, and the time information indicates an amount of time used to complete each of the plurality of intent solutions. In this way, the second device may comprehensively select, with reference to the resource information and/or the time information corresponding to each intent solution, an intent solution that satisfies a requirement of the second device, thereby further improving accuracy of the selected intent solution to be executed.

In a possible design solution, the first request message includes a first intent expression, and the first intent expression is used to request to create the first intent instance. In other words, the first device may create the first intent instance based on the intent expectation, the expectation target, the expectation object, and the context of the intent, the intent expectation, and the expectation target that are carried in the first intent expression.

In a possible design solution, before the first device sends the first information and the plurality of identifiers to the second device, the method according to the first aspect may further include: The first device generates the plurality of intent solutions based on the first intent instance. It may be understood that the plurality of intent solutions may be used to implement the first intent instance. For example, the plurality of intent solutions may satisfy all expectation targets of the first intent instance, or satisfy some expectation targets of the first intent instance, so that the second device subsequently selects, from the plurality of pre-generated intent solutions, the intent solution to be executed.

In a possible design solution, the method according to the first aspect further includes: The first device generates the first information based on the plurality of intent solutions. In other words, the first device may directly obtain the first information based on the first intent instance by invoking an internal service, for example, a component such as perception, analysis, or decision. In this way, signaling overhead can be reduced.

In a possible design solution, the method according to the first aspect may further include: The first device sends a second request message to a third device, and receives the first information returned by the third device based on the second request message. The second request message includes a plurality of intent solutions, and the second request message is used to request to obtain estimated intent expectations during execution of each of the plurality of intent solutions. In other words, the first device sends the second request message to the third device of a third party, to request the third device to generate the first information, and receive the first information returned by the third device. The third device may be a digital twin system, a knowledge base, or an artificial intelligence AI model with a pre-evaluation function. In this way, accuracy of the first information can be improved.

Optionally, the second request message further includes an expectation list and/or expectation object information. The expectation list indicates at least one intent expectation, and the expectation object information indicates an object that executes the first intent instance. In this way, the third device may pre-execute each intent solution based on the expectation object information, and sequentially determine, based on a pre-execution result and an expectation list, whether the estimated intent expectation during execution of each intent solution satisfies each of the at least one intent expectation, to obtain the first information.

In a possible design solution, the first device is an intent producer, and the second device is an intent consumer. In other words, the first device and the second device may be applied to a 3GPP architecture. In this way, requirements in different scenarios can be satisfied.

In a possible design solution, the first device includes a first functional entity, a second functional entity, and a first application, or a combination of the first functional entity, the second functional entity, and the first application may implement a same function or effect as the first device. The second device is an intent owner. That the first device generates the plurality of intent solutions based on the first intent instance includes: The first application generates the plurality of intent solutions based on the first intent instance forwarded by the first functional entity by using the second functional entity. It may be understood that the first functional entity may be a Non-RT RIC, the second functional entity may be a Near-RT RIC, and the first application may be an extended application, for example, an XAPP 1. In other words, the first device and the second device may be applied to an O-RAN architecture. In this way, requirements in different scenarios can be satisfied.

Optionally, that the first device sends the second request message to the third device includes: The first application sends the second request message to the third device. That the first device receives the first information returned by the third device based on the second request message includes: The first functional entity receives the first information forwarded by the third device by using the second functional entity. The third device may be an extended application running on the second functional entity, for example, an XAPP 2, so that the first device obtains the first information in the O-RAN architecture.

In a possible design solution, the method according to the first aspect may further include: The first device determines a first intent solution based on the first identifier. In other words, the first device may directly select the first intent solution from the plurality of intent solutions based on the first identifier, to avoid error identification or misidentification.

In a possible design solution, when estimated intent expectations during execution of at least two intent solutions among the plurality of intent solutions satisfy each of the at least one intent expectation, the first intent solution is one of the at least two intent solutions. That is, the second device may select, based on a requirement or preference of the second device, the first intent solution from the at least two intent solutions that can satisfy each of the at least one intent expectation, to improve accuracy of the selected intent solution to be executed.

In a possible design solution, when no estimated intent expectation during execution of any one of the plurality of intent solutions satisfies each of the at least one intent expectation, the method according to the first aspect may further include: The first device receives a second intent expression from the second device. The second intent expression is determined based on the estimated intent expectation of the first intent solution. That is, the second device may select, based on the requirement or the preference of the second device, the first intent solution from the at least one intent solution that can partly satisfy the at least one intent expectation, to improve accuracy of the selected intent solution to be executed.

Optionally, the method according to the first aspect may further include: The first device modifies the first intent instance based on the second intent expression. In this way, after the first device executes the first intent solution, a modified first intent instance can be satisfied, and intent execution efficiency can be improved.

According to a second aspect, a communication method is provided. The method may be performed by a second device, may be performed by a chip or a circuit configured in the second device, or may be performed by a logical module or software that can implement all or some functions of the second device. The method includes: The second device sends a first request message to a first device, receives first information and a plurality of identifiers from the first device, determines a first identifier based on the first information and the plurality of identifiers, and sends the first identifier to the first device. The first request message is used to request to create a first intent instance, and the first intent instance includes at least one intent expectation. The first information indicates whether an estimated intent expectation during execution of each of the plurality of intent solutions satisfies each of the at least one intent expectation, and the plurality of intent solutions are used to implement the first intent instance. The plurality of identifiers are in a one-to-one correspondence with the plurality of intent solutions.

In a possible design solution, the first information includes first indication information and/or an expected value list. The first indication information indicates whether the estimated intent expectation during execution of each of the plurality of intent solutions satisfies each of the at least one intent expectation, and the expected value list indicates an expected target value of the estimated intent expectation during execution of each of the plurality of intent solutions.

Optionally, the first information further includes resource information and/or time information. The resource information indicates a quantity of resources used to complete each of the plurality of intent solutions, and the time information indicates an amount of time used to complete each of the plurality of intent solutions.

In a possible design solution, the first request message includes a first intent expression, and the first intent expression is used to request to create the first intent instance.

In a possible design solution, the first identifier corresponds to the first intent solution, and when estimated intent expectations during execution of at least two intent solutions among the plurality of intent solutions satisfy each of the at least one intent expectation, the first intent solution is one of the at least two intent solutions.

In a possible design solution, the first identifier corresponds to a first intent solution, and when no estimated intent expectation during execution of any one of the plurality of intent solutions satisfies each of the at least one intent expectation, the method according to the second aspect may further include: The second device generates a second intent expression based on an estimated intent expectation of the first intent solution, and sends the second intent expression to the first device for the first device to subsequently modify the first intent instance.

In a possible design solution, the first device is an intent producer, and the second device is an intent consumer.

In a possible design solution, the first device includes a first functional entity, a second functional entity, and a first application, and the second device is an intent owner.

In addition, for technical effects related to the method according to the second aspect, refer to related descriptions of the method according to the first aspect. Details are not described herein again.

According to a third aspect, a communication method is provided. The method may be performed by a third device, may be performed by a chip or a circuit configured in the third device, or may be performed by a logical module or software that can implement all or some functions of the third device. The method includes: The third device receives a second request message from a first device, generates first information based on the second request message, and sends the first information to the first device. The second request message includes a plurality of intent solutions. The second request message is used to request to obtain an estimated intent expectation during execution of the intent solution. The first information indicates whether the estimated intent expectation during execution of each of the plurality of intent solutions satisfies each of at least one intent expectation. The plurality of intent solutions are used to implement a first intent instance.

In a possible design solution, the second request message further includes an expectation list and/or expectation object information. The expectation list indicates at least one intent expectation, and the expectation object information indicates an object that executes the first intent instance.

In a possible design solution, that the third device generates the first information based on the second request message includes: The third device obtains the estimated intent expectation during execution of each of the plurality of intent solutions based on the expectation object information, and generates the first information based on the estimated intent expectation during execution of each of the plurality of intent solutions and the expectation list.

For technical effects related to the method according to the third aspect, refer to related descriptions of the method according to the first aspect. Details are not described herein again.

According to a fourth aspect, a communication method is provided. The method may be performed by a first device, may be performed by a chip or a circuit configured in the first device, or may be performed by a logical module or software that can implement all or some functions of the first device. The method includes: The first device receives a first request message from a second device, obtains first information based on the first request message, and determines, based on policy information and the first information, a first intent solution to be executed. The first request message is used to request to create a first intent instance, and the first intent instance includes at least one intent expectation. The first request message includes the policy information, and the policy information indicates a policy for selecting an intent solution to be executed. The first information indicates whether an estimated intent expectation during execution of each of the plurality of intent solutions satisfies each of the at least one intent expectation, and the plurality of intent solutions are used to implement the first intent instance. The first intent solution is one of the plurality of intent solutions.

It can be learned from the method according to the fourth aspect that the first device may directly select the first intent solution from the plurality of intent solutions based on the policy information sent by the second device and the first information including whether the estimated intent expectation during execution of each of the plurality of intent solutions used to implement the first intent instance satisfies each of at least one intent expectation. In this way, the first device does not need to adjust an intent execution solution multiple times to fulfill each of the at least one intent expectation, thereby improving intent execution efficiency and reducing resource overhead.

In a possible design solution, the policy information includes at least one of the following: resource policy information, time policy information, or priority policy information. The resource policy information indicates to perform selection based on an occupied resource amount. The time policy information indicates to perform selection based on preset execution time of the first intent instance. The execution time is used to represent that each of the at least one intent expectation needs to be satisfied within the execution time. The priority policy information indicates to perform selection based on a priority sequence of each of the at least one intent expectation. In this way, the first device may determine, based on the resource policy information, the time policy information, or the priority policy information, and a combination of the policies, an intent solution that satisfies a requirement and a preference of the second device, thereby improving accuracy of the selected intent solution to be executed.

In a possible design solution, that the first device determines, based on the policy information and the first information, the first intent solution to be executed includes: When estimated intent expectations during execution of at least two intent solutions among the plurality of intent solutions satisfy each of the at least one intent expectation, the first device determines, based on the policy information and the first information, the first intent solution to be executed. The first intent solution is one of the at least two intent solutions. In other words, when estimated intent expectations during execution of at least two intent solutions can satisfy each of the at least one intent expectation, the first device may select by itself, based on the policy information, the intent solution to be executed, and does not need to report the first information to the second device, and then the second device selects the intent solution to be executed. This is easy to implement, and can reduce signaling overhead.

In a possible design solution, the first device is an intent producer, and the second device is an intent consumer.

In a possible design solution, the first device includes a first functional entity, a second functional entity, and a first application, and the second device is an intent owner.

In addition, for technical effects related to the method according to the fourth aspect, refer to related descriptions of the method according to the first aspect. Details are not described herein again.

According to a fifth aspect, a communication method is provided. The method may be performed by a second device, may be performed by a chip or a circuit configured in the second device, or may be performed by a logical module or software that can implement all or some functions of the second device. The method includes: The second device generates policy information, and sends a first request message to a first device. The policy information indicates a policy for selecting an intent solution. The first request message is used to request to create a first intent instance, and the first intent instance includes at least one intent expectation. The first request message includes the policy information.

In a possible design solution, the policy information includes at least one of the following: resource policy information, time policy information, or priority policy information. The resource policy information indicates to perform selection based on an occupied resource amount. The time policy information indicates to perform selection based on preset execution time of the first intent instance. The execution time is used to represent that each of the at least one intent expectation needs to be satisfied within the execution time. The priority policy information indicates to perform selection based on a priority sequence of each of the at least one intent expectation.

In a possible design solution, the first device is an intent producer, and the second device is an intent consumer.

In a possible design solution, the first device includes a first functional entity, a second functional entity, and a first application, and the second device is an intent owner.

In addition, for technical effects related to the method in the fifth aspect, refer to related descriptions of the methods according to the first aspect and the fourth aspect. Details are not described herein again.

According to a sixth aspect, a communication method is provided. The method includes: A first device performs the method according to the first aspect, and a second device performs the method according to the second aspect.

In addition, for technical effects of the method according to the sixth aspect, refer to the technical effects of the methods according to the first aspect and the second aspect. Details are not described herein again.

According to a seventh aspect, a communication method is provided. The method includes: A first device performs the method according to the first aspect, a second device performs the method according to the second aspect, and a third device performs the method according to the third aspect.

In addition, for technical effects of the method according to the seventh aspect, refer to the technical effects of the methods according to the first aspect to the third aspect. Details are not described herein again.

According to an eighth aspect, a communication method is provided. The method includes: A first device performs the method according to the fourth aspect, and a second device performs the method according to the fifth aspect.

In addition, for technical effects of the method according to the eighth aspect, refer to the technical effects of the methods according to the fourth aspect and the fifth aspect. Details are not described herein again.

According to a ninth aspect, a communication apparatus is provided. The communication apparatus includes modules configured to perform the method according to the first aspect, for example, a transceiver module and a processing module.

The transceiver module is configured to: receive a first request message from a second device, send first information and a plurality of identifiers to the second device, and receive a first identifier from the second device. The first request message is used to request to create a first intent instance, and the first intent instance includes at least one intent expectation. The first information indicates whether an estimated intent expectation during execution of each of the plurality of intent solutions satisfies each of the at least one intent expectation, and the plurality of intent solutions are used to implement the first intent instance. The plurality of identifiers are in a one-to-one correspondence with the plurality of intent solutions. The first identifier indicates an intent solution to be executed, and the first identifier is one of the plurality of identifiers.

In a possible design solution, the first information includes first indication information and/or an expected value list. The first indication information indicates whether the estimated intent expectation during execution of each of the plurality of intent solutions satisfies each of the at least one intent expectation, and the expected value list indicates an expected target value of the estimated intent expectation during execution of each of the plurality of intent solutions.

Optionally, the first information further includes resource information and/or time information. The resource information indicates a quantity of resources used to complete each of the plurality of intent solutions, and the time information indicates an amount of time used to complete each of the plurality of intent solutions.

In a possible design solution, the first request message includes a first intent expression, and the first intent expression is used to request to create the first intent instance.

In a possible design solution, before the first device sends the first information and the plurality of identifiers to the second device, the processing module is configured to generate the plurality of intent solutions based on the first intent instance.

In a possible design solution, the processing module is further configured to generate the first information based on the plurality of intent solutions.

In a possible design solution, the transceiver module is further configured to: send a second request message to a third device, and receive the first information returned by the third device based on the second request message. The second request message includes a plurality of intent solutions, and the second request message is used to request to obtain estimated intent expectations during execution of each of the plurality of intent solutions.

Optionally, the second request message further includes an expectation list and/or expectation object information. The expectation list indicates at least one intent expectation, and the expectation object information indicates an object that executes the first intent instance.

In a possible design solution, the processing module is further configured to determine the first intent solution based on the first identifier.

In a possible design solution, when estimated intent expectations during execution of at least two intent solutions among the plurality of intent solutions satisfy each of the at least one intent expectation, the first intent solution is one of the at least two intent solutions.

In a possible design solution, when no estimated intent expectation during execution of any one of the plurality of intent solutions satisfies each of the at least one intent expectation, the transceiver module is further configured to receive a second intent expression from the second device. The second intent expression is determined based on the estimated intent expectation of the first intent solution.

Optionally, the processing module is further configured to modify the first intent instance based on the second intent expression.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module. The storage module stores a program or instructions. When the processing module executes the program or the instructions, the communication apparatus is enabled to perform the communication method according to the first aspect.

It should be noted that the communication apparatus according to the ninth aspect may be a first device, may be a chip (system) or another part or component that may be disposed in the first device, or may be an apparatus including the first device. This is not limited in embodiments of this application.

In addition, for a technical effect of the communication apparatus according to the ninth aspect, refer to the technical effect of the communication method in the first aspect. Details are not described herein again.

According to a tenth aspect, a communication apparatus is provided. The apparatus includes modules configured to perform the method according to the second aspect, for example, a transceiver module and a processing module.

The transceiver module is configured to send a first request message to a first device, and receive first information and a plurality of identifiers from the first device. The processing module is configured to determine a first identifier based on the first information and the plurality of identifiers. The transceiver module is further configured to send the first identifier to the first device. The first request message is used to request to create a first intent instance, and the first intent instance includes at least one intent expectation. The first information indicates whether an estimated intent expectation during execution of each of the plurality of intent solutions satisfies each of the at least one intent expectation, and the plurality of intent solutions are used to implement the first intent instance. The plurality of identifiers are in a one-to-one correspondence with the plurality of intent solutions.

In a possible design solution, the first information includes first indication information and/or an expected value list. The first indication information indicates whether the estimated intent expectation during execution of each of the plurality of intent solutions satisfies each of the at least one intent expectation, and the expected value list indicates an expected target value of the estimated intent expectation during execution of each of the plurality of intent solutions.

Optionally, the first information further includes resource information and/or time information. The resource information indicates a quantity of resources used to complete each of the plurality of intent solutions, and the time information indicates an amount of time used to complete each of the plurality of intent solutions.

In a possible design solution, the first request message includes a first intent expression, and the first intent expression is used to request to create the first intent instance.

In a possible design solution, the first identifier corresponds to the first intent solution, and when estimated intent expectations during execution of at least two intent solutions among the plurality of intent solutions satisfy each of the at least one intent expectation, the first intent solution is one of the at least two intent solutions.

In a possible design solution, the first identifier corresponds to a first intent solution, and when no estimated intent expectation during execution of any one of the plurality of intent solutions satisfies each of the at least one intent expectation, the processing module is further configured to generate a second intent expression based on an estimated intent expectation of the first intent solution. The transceiver module is further configured to send the second intent expression to the first device.

Optionally, the transceiver module may include a sending module and a receiving module. The sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module. The storage module stores a program or instructions. When the processing module executes the program or the instructions, the communication apparatus is enabled to perform the communication method according to the second aspect.

It should be noted that the communication apparatus according to the tenth aspect may be a second device, may be a chip (system) or another part or component that may be disposed in the second device, or may be an apparatus including the second device. This is not limited in embodiments of this application.

In addition, for a technical effect of the communication apparatus according to the tenth aspect, refer to the technical effect of the communication method in the second aspect. Details are not described herein again.

According to an eleventh aspect, a communication apparatus is provided. The apparatus includes modules configured to perform the method according to the third aspect, for example, a transceiver module and a processing module.

The transceiver module is configured to receive a second request message from a first device. The processing module is configured to generate first information based on the second request message. The transceiver module is further configured to send the first information to the first device. The second request message includes a plurality of intent solutions. The second request message is used to request to obtain an estimated intent expectation during execution of the intent solution. The first information indicates whether the estimated intent expectation during execution of each of the plurality of intent solutions satisfies each of at least one intent expectation. The plurality of intent solutions are used to implement a first intent instance.

In a possible design solution, the second request message further includes an expectation list and/or expectation object information. The expectation list indicates at least one intent expectation, and the expectation object information indicates an object that executes the first intent instance.

In a possible design solution, the processing module is further configured to: obtain the estimated intent expectation during execution of each of the plurality of intent solutions based on the expectation object information, and generate the first information based on the estimated intent expectation during execution of each of the plurality of intent solutions and the expectation list.

Optionally, the transceiver module may include a sending module and a receiving module. The sending module is configured to implement a sending function of the communication apparatus according to the eleventh aspect, and the receiving module is configured to implement a receiving function of the communication apparatus according to the eleventh aspect.

Optionally, the communication apparatus according to the eleventh aspect may further include a storage module, and the storage module stores a program or instructions. When the processing module executes the program or the instructions, the communication apparatus is enabled to perform the communication method according to the third aspect.

It should be noted that the communication apparatus according to the eleventh aspect may be a third device, may be a chip (system) or another part or component that may be disposed in the third device, or may be an apparatus including the third device. This is not limited in embodiments of this application.

In addition, for a technical effect of the communication apparatus according to the eleventh aspect, refer to the technical effect of the communication method in the third aspect. Details are not described herein again.

According to a twelfth aspect, a communication apparatus is provided. The apparatus includes modules configured to perform the method according to the fourth aspect, for example, a transceiver module and a processing module.

The transceiver module is configured to receive a first request message from a second device. The processing module is configured to obtain first information based on the first request message. The transceiver module is further configured to determine, based on policy information and the first information, a first intent solution to be executed. The first request message is used to request to create a first intent instance, and the first intent instance includes at least one intent expectation. The first request message includes the policy information, and the policy information indicates a policy for selecting an intent solution to be executed. The first information indicates whether an estimated intent expectation during execution of each of the plurality of intent solutions satisfies each of the at least one intent expectation, and the plurality of intent solutions are used to implement the first intent instance. The first intent solution is one of the plurality of intent solutions.

In a possible design solution, the policy information includes at least one of the following: resource policy information, time policy information, or priority policy information. The resource policy information indicates to perform selection based on an occupied resource amount. The time policy information indicates to perform selection based on preset execution time of the first intent instance. The execution time is used to represent that each of the at least one intent expectation needs to be satisfied within the execution time. The priority policy information indicates to perform selection based on a priority sequence of each of the at least one intent expectation.

In a possible design solution, when estimated intent expectations during execution of at least two intent solutions among the plurality of intent solutions satisfy each of the at least one intent expectation, the processing module is further configured to determine, based on the policy information and the first information, the first intent solution to be executed. The first intent solution is one of the at least two intent solutions.

Optionally, the transceiver module may include a sending module and a receiving module. The sending module is configured to implement a sending function of the communication apparatus according to the twelfth aspect, and the receiving module is configured to implement a receiving function of the communication apparatus according to the twelfth aspect.

Optionally, the communication apparatus according to the twelfth aspect may further include a storage module, and the storage module stores a program or instructions. When the processing module executes the program or the instructions, the communication apparatus is enabled to perform the communication method according to the fourth aspect.

It should be noted that the communication apparatus according to the twelfth aspect may be a first device, may be a chip (system) or another part or component that may be disposed in the first device, or may be an apparatus including the first device. This is not limited in embodiments of this application.

In addition, for a technical effect of the communication apparatus according to the twelfth aspect, refer to the technical effect of the communication method in the fourth aspect. Details are not described herein again.

According to a thirteenth aspect, a communication apparatus is provided. The apparatus includes modules configured to perform the method according to the fifth aspect, for example, a transceiver module and a processing module.

The processing module is configured to generate policy information. The transceiver module is configured to send a first request message to a first device. The policy information indicates a policy for selecting an intent solution. The first request message is used to request to create a first intent instance, and the first intent instance includes at least one intent expectation. The first request message includes the policy information.

In a possible design solution, the policy information includes at least one of the following: resource policy information, time policy information, or priority policy information. The resource policy information indicates to perform selection based on an occupied resource amount. The time policy information indicates to perform selection based on preset execution time of the first intent instance. The execution time is used to represent that each of the at least one intent expectation needs to be satisfied within the execution time. The priority policy information indicates to perform selection based on a priority sequence of each of the at least one intent expectation.

Optionally, the transceiver module may include a sending module and a receiving module. The sending module is configured to implement a sending function of the communication apparatus according to the thirteenth aspect, and the receiving module is configured to implement a receiving function of the communication apparatus according to the thirteenth aspect.

Optionally, the communication apparatus according to the thirteenth aspect may further include a storage module. The storage module stores a program or instructions. When the processing module executes the program or the instructions, the communication apparatus is enabled to perform the communication method according to the fifth aspect.

It should be noted that the communication apparatus according to the thirteenth aspect may be a second device, may be a chip (system) or another part or component that may be disposed in the second device, or may be an apparatus including the second device. This is not limited in embodiments of this application.

In addition, for a technical effect of the communication apparatus according to the thirteenth aspect, refer to the technical effect of the communication method in the fifth aspect. Details are not described herein again.

According to a fourteenth aspect, a communication apparatus is provided. The communication apparatus includes a processor. The processor is configured to perform the method according to any one of the possible implementations of the first aspect to the fifth aspect.

In a possible implementation, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In a possible implementation, the communication apparatus according to the fourteenth aspect may further include a memory. The memory and the processor may be integrated together, or may be disposed separately. The memory may be configured to store a computer program and/or data related to the communication method in any one of the possible implementations of the first aspect to the fifth aspect.

In this embodiment, the communication apparatus according to the fourteenth aspect may be a first device, a second device, or a third device, or a chip (system) or another part or component that may be disposed in the first device, the second device, or the third device, or an apparatus including the first device, the second device, or the third device.

In addition, for technical effects of the communication apparatus according to the fourteenth aspect, refer to the technical effects of the communication method according to any one of the possible implementations of the first aspect to the fifth aspect. Details are not described herein again.

According to a fifteenth aspect, a communication apparatus is provided. The communication apparatus includes a processor. The processor is coupled to a memory, and the processor is configured to execute a computer program stored in the memory, so that the communication apparatus performs the communication method in any one of the possible implementations of the first aspect to the fifth aspect.

In a possible implementation, the communication apparatus according to the fifteenth aspect may further include a transceiver. The transceiver may be a transceiver circuit or an interface circuit. The transceiver may be used by the communication apparatus according to the fifteenth aspect to communicate with another communication apparatus.

In this embodiment, the communication apparatus according to the fifteenth aspect may be a device (for example, a first device, a second device, or a third device), a chip (system) or another part or component that may be disposed in the device, or an apparatus including the device.

In addition, for technical effects of the communication apparatus according to the fifteenth aspect, refer to the technical effects of the communication method according to any one of the possible implementations of the first aspect to the fifth aspect. Details are not described herein again.

According to a sixteenth aspect, a communication apparatus is provided, including a processor and a memory. The memory is configured to store a computer program. When the processor executes the computer program, the communication apparatus is enabled to perform the communication method according to any one of the possible implementations of the first aspect to the fifth aspect.

In a possible implementation, the communication apparatus according to the sixteenth aspect may further include a transceiver. The transceiver may be a transceiver circuit or an interface circuit. The transceiver may be used by the communication apparatus according to the sixteenth aspect to communicate with another communication apparatus.

In this embodiment, the communication apparatus according to the sixteenth aspect may be a device (for example, a first device, a second device, or a third device), a chip (system) or another part or component that may be disposed in the device, or an apparatus including the device.

In addition, for technical effects of the communication apparatus according to the sixteenth aspect, refer to the technical effects of the communication method according to any one of the possible implementations of the first aspect to the fifth aspect. Details are not described herein again.

According to a seventeenth aspect, a communication apparatus is provided, and includes a processor. The processor is configured to: be coupled to a memory; and after reading a computer program in the memory, perform, based on the computer program, the communication method according to any one of the possible implementations of the first aspect to the fifth aspect.

In a possible implementation, the communication apparatus according to the seventeenth aspect may further include a transceiver. The transceiver may be a transceiver circuit or an interface circuit. The transceiver may be used by the communication apparatus according to the seventeenth aspect to communicate with another communication apparatus.

In this embodiment, the communication apparatus according to the seventeenth aspect may be a device (for example, a first device, a second device, or a third device), a chip (system) or another part or component that may be disposed in the device, or an apparatus including the device.

In addition, for technical effects of the communication apparatus according to the seventeenth aspect, refer to the technical effects of the communication method according to any one of the possible implementations of the first aspect to the fifth aspect. Details are not described herein again.

According to an eighteenth aspect, a communication system is provided. The communication system includes the first device according to the first aspect and/or the second device according to the second aspect. Optionally, the communication system further includes the third device according to the third aspect.

According to a nineteenth aspect, a communication system is provided. The communication system includes the first device according to the fourth aspect and/or the second device according to the fifth aspect.

According to a twentieth aspect, a computer-readable storage medium is provided, and includes a computer program or instructions. When the computer program or the instructions are run on a computer, the computer is enabled to perform the communication method according to any one of the possible implementations of the first aspect to the fifth aspect.

According to a twenty-first aspect, a computer program product is provided. The computer program product includes a computer program or instructions. When the computer program or the instructions are run on a computer, the computer is enabled to perform the communication method according to any one of the possible implementations of the first aspect to the fifth aspect.

### BRIEF DESCRIPTION OF DRAWINGS

FIG. 1 is a diagram of an architecture of a communication system according to an embodiment of this application;
FIG. 2 is a diagram of a 3GPP architecture according to an embodiment of this application;
FIG. 3 is a diagram of an O-RAN architecture according to an embodiment of this application;
FIG. 4 is a first schematic flowchart of a communication method according to an embodiment of this application;
FIG. 5 is a second schematic flowchart of a communication method according to an embodiment of this application;
FIG. 6 is a third schematic flowchart of a communication method according to an embodiment of this application;
FIG. 7A to FIG. 7C are a fourth schematic flowchart of a communication method according to an embodiment of this application;
FIG. 8A to FIG. 8C are a fifth schematic flowchart of a communication method according to an embodiment of this application;
FIG. 9 is a first diagram of a structure of a communication apparatus according to an embodiment of this application; and
FIG. 10 is a second diagram of a structure of a communication apparatus according to an embodiment of this application.

### DESCRIPTION OF EMBODIMENTS

For ease of understanding, the following first describes technical terms in embodiments.

### 1. Intent (intent)

Currently, the 3rd Generation Partnership Project (the 3rd generation partnership project, 3GPP) service and system aspect work group 5 (service and system aspect work group 5, SA5) adopts full modeling of network resources and full management of network objects in the definition of a conventional northbound interface (itf-N) of a network management system (network management system, NMS). The NMS directly adds, deletes, modifies, and queries all southbound managed objects through operations such as configuration management (configuration management, CM), performance management (performance management, PM), and fault management (fault management, FM). This not only raises a management and operation and maintenance threshold for operators, but also exposes differentiated implementation of device vendors. Consequently, it is difficult to implement interoperability between different vendors.

To reduce complexity of network infrastructure management and improve operation and maintenance efficiency in multi-vendor (Multi-vendor) scenarios, 3GPP SA5 starts research on an intent-driven management service (intent-driven management service, IDMS). The main solving idea is as follows: The NMS serves as an intent consumer, retains only an intent model, and transfers only an intent expression over a northbound interface, shielding differentiated details of device vendors in terms of implementation. The intent is expressed in a declarative manner, and operation and maintenance personnel only need to declare, by using an intent expression, what (what) to be achieved, and do not need to determine how (how) to achieve. This helps lower the operation and maintenance threshold. After receiving the intent expression, an intent producer, that is, an equipment management system (equipment management system, EMS), needs to create an intent instance based on the intent expression. Specifically, the EMS may translate, based on a network status, the intent expression into a requirement on a network and a specific execution operation, and execute the requirement and the specific execution operation to fulfill the intent.

The following describes concepts related to the intent.

Intent: is an expectation on a system under action, including requirements, goals, and constraints, and describes only what needs to be achieved, without describing how to achieve.

Intent expression: is an expression used to carry an intent. The expression includes an intent expectation, an expectation target, an expectation object, and a context of the intent, the intent expectation, and the expectation target, and has specific syntax and semantics.

Intent instance: is an object obtained by instantiating an intent. For example, in embodiments of this application, the intent may be replaced with the intent instance.

Intent conflict: When two intents cannot be satisfied simultaneously due to mutual exclusion, the two intents conflict with each other. The intent conflict may include one or more of a syntax conflict, an operation conflict, or an effect conflict.

The syntax conflict means that there is a conflict between intent expressions of two intents. For example, the intent expressions of the two intents describe mutually exclusive targets of a same object (such as a cell or a base station) under a same effect taking condition. For example, if an intent expression of one intent reflects a target of increasing a downlink rate of a cell, and an intent expression of the other intent reflects a target of reducing the downlink rate of the cell, there is a syntax conflict between the two intents.

The operation conflict is a conflict between two intents in terms of translated execution operations (intent operation). In other words, operations of the two intents cannot be simultaneously performed. For example, solutions respectively corresponding to the two intents include mutually exclusive operations on a same parameter and/or attribute of a same network element. For example, when a solution of an intent #1 requires that a network configuration parameter A be increased, and a solution of an intent #2 requires that the network configuration parameter A be decreased, there is an operation conflict between the intent #1 and the intent #2.

The effect conflict means that translated execution operations of two intents are mutually exclusive in terms of effect.

Intent creation: means to create an intent instance in an intent system and create a corresponding intent context.

A1 interface: is an interface between a non-real-time radio access network (radio access network, RAN) intelligent controller (non-real-time RAN intelligent controller, Non-RT RIC) and a near-real-time radio access network intelligent controller (near-real-time RAN intelligent controller, Near-RT RIC), and may implement machine learning (machine learning, ML) model management (such as ML model deployment and update), policy management, and rich information transmission functions.

E2 interface: is an interface between a Near-RT RIC and a RAN function network element, so that the Near-RT RIC controls the RAN function network element, and the RAN function network element may report performance data, such as per-user equipment (Per-user equipment, Per-UE) and per-cell (Per-cell), through the E2 interface.

E2 node: is a logical node connected to an E2 interface; for new radio (new radio, NR) access, is an open-radio access network central unit-control plane (O-RAN central unit-control plane, O-CU-CP), an open-radio access network central unit-user plane (O-RAN central unit-user plane, O-CU-UP), an open-radio access network distributed unit (O-RAN distributed Unit, O-DU), and the like; and for E-UTRA access, is an open-radio access network evolved NodeB (O-RAN evolved NodeB, O-eNB).

A1 policy: uses a declarative policy expression form, so that a Non-RT RIC in a service management and orchestration (service management and orchestration, SMO) framework can guide functions in a Near-RT RIC to better achieve a RAN intent. The A1 policy may include a policy type identifier (policyTypeId), a policy identifier (policyId), and a policy object (policyObject).

The RAN intent may be a higher-layer operation or service objective to be achieved by a radio access network, allowing an operator to specify a service level agreement (service level agreement, SLA) that the RAN implements for all or a type of users in a given area within a period of time. The policyTypeId may be a policy type identifier allocated by an owner that defines the policyType, and includes two parts: a type name (TypeName) and a version (version), for example, ORAN_QoSTarget_2.0.0. The policyId may be an identifier allocated by the Non-RT RIC when the A1 policy is created. The policyObject may be an A1 policy representation in a lightweight data exchange (JavaScript object notation, JSON) format used as a load in a hypertext transfer protocol (hypertext transfer protocol, HTTP)-based policy process, mainly including an application scope of the A1 policy, a target of the A1 policy, and resources of the A1 policy.

### 2. Intent consumer and intent producer.

The intent consumer is a device that manages the intent. Specifically, the intent consumer may generate the intent, and send, to the intent producer, an intent expression used to carry the intent. The intent may be a requirement of the intent consumer for a network in which a device executing an intent solution is located. For example, the intent may reflect a requirement of the intent consumer for at least one key performance indicator (key performance indicator, KPI) in the network in which the device executing the intent solution is located.

The intent producer is a device that processes the intent. Specifically, after receiving the intent expression from the intent consumer, the intent producer may generate a plurality of solutions that can satisfy the intent, and select one of the solutions for execution. Then, the intent producer may send the selected solution to the device executing the intent, so that the device executing the intent executes the selected solution.

The intent consumer and/or the intent producer may be, but is not limited to, a compute device, a server, a network device, or the like. For example, the intent consumer may be a business support system (business support system, BSS), an operations support system (operations support system, OSS), an NMS, an IDMS consumer, an MnS consumer, or the like. This is not limited.

The intent producer may be an NMS, an EMS, an IDMS producer, an MnS producer, or the like. This is not limited.

It should be understood that the intent consumer and the intent producer may alternatively use other names provided that same functions are possessed. This is not limited in embodiments of this application.

Currently, the intent processing capability supported by the MnS producer in the IDMS includes translating a received intent into internal logic to be executed, executing the complex internal logic to satisfy the intent, and finally reporting an intent execution result to the management service consumer MnS consumer. The MnS consumer may deliver the intent to the MnS producer by invoking an intent-driven management service interface. The MnS producer may translate the intent into a specific execution policy or an intent execution solution. The execution solution is used to fulfill the intent. The MnS producer delivers the execution solution to the network infrastructure, and continuously monitors a network status during intent execution to ensure fulfillment of the intent. When the intent delivered by the MnS consumer includes a plurality of intent expectations, the MnS producer may need to adjust the intent execution solution multiple times to fulfill the plurality of intent expectations.

In one case, the MnS producer may find different intent execution solutions that can satisfy an intent expectation. One alternative intent execution solution may be better or superior in one aspect, and another alternative intent execution solution may be better in another aspect. For example, the intent includes a user experience expectation and an energy saving expectation. In this case, one intent execution solution can achieve a better energy saving effect while ensuring basic user experience, and another intent execution solution can achieve a basic energy saving effect while ensuring better user experience.

In another case, the MnS producer may not find an intent execution solution that can satisfy all intent expectations, but may have some alternative intent execution solutions that can obtain better results for some expectations of a plurality of intent expectations. For example, the intent includes a user experience expectation and an energy saving expectation. Some solutions can satisfy the user experience expectation, and some other solutions can satisfy the energy saving expectation.

In the foregoing two cases, the MnS producer needs to adjust the intent execution solution multiple times to fulfill a plurality of intent expectations expected by the intent. However, in this process, the MnS producer needs to perform selection and calculation multiple times. In addition, after the intent execution solution is adjusted multiple times, an intent execution solution that can satisfy the plurality of intent expectations expected by the intent may still not be selected, or a fulfillment effect of the intent execution solution selected by the MnS producer does not match a fulfillment effect expected by the MnS consumer. This may reduce intent execution efficiency and increase resource overhead.

For the foregoing technical problem, embodiments of this application provide the following technical solutions to improve intent execution efficiency and reduce resource overhead.

The following describes technical solutions of embodiments in this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, 4G such as a long term evolution (long term evolution, LTE) system, a worldwide interoperability for microwave access (worldwide interoperability for microwave access, WiMAX) communication system, 5G such as a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship. It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overhead to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

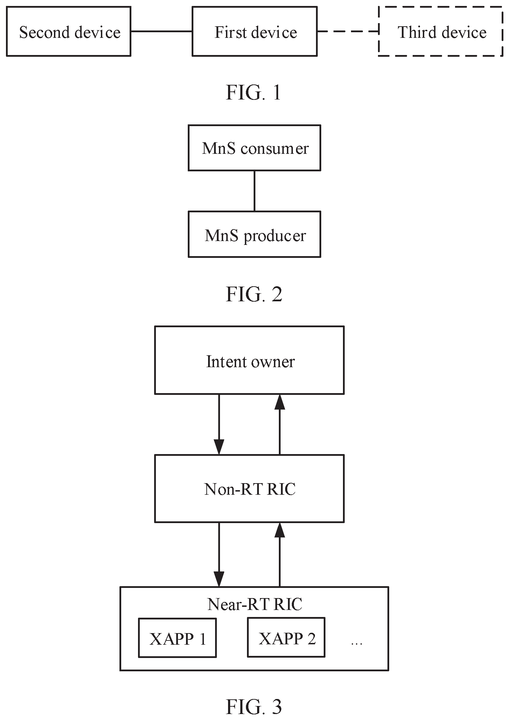

For ease of understanding embodiments of this application, a communication system shown in FIG. 1 is first used as an example to describe in detail a communication system applicable to embodiments of this application. For example, FIG. 1 is a diagram 1 of an architecture of a communication system to which a communication method is applicable according to an embodiment of this application.

As shown in FIG. 1, the communication system mainly includes a first device and a second device. Optionally, the communication system further includes a third device. It may be understood that the "device" mentioned in embodiments of this application is merely an example for description, and the "device" may be replaced with any possible description, such as "an apparatus" or "a module". This is not limited.

The communication system may be used in different communication system architectures, for example, a 3GPP architecture or an open-radio access network (open-radio access network, O-RAN) architecture. In different architectures, the first device and the second device may be different devices. The following separately describes the first device and the second device.

The communication system may be applied to a 3GPP architecture. FIG. 2 is a diagram of a 3GPP architecture according to an embodiment of this application. As shown in FIG. 2, the first device may be an MnS producer (Producer), and the second device may be an MnS consumer (Consumer). The MnS consumer may deliver an intent to the MnS producer by invoking an intent-driven management service (intent-driven MnS) interface, and the MnS producer may translate the intent into a specific execution policy and deliver the specific execution policy to the network infrastructure, and continuously monitor a network status during intent execution to ensure fulfillment of the intent.

In the architecture, the third device may be a third-party pre-evaluation system or an intent pre-evaluation system (not shown in FIG. 2), for example, a digital twin system, a knowledge base, or an artificial intelligence (artificial intelligence, AI) model with a pre-evaluation function. This is not limited. It should be understood that, the third device may further invoke modules such as perception, analysis, and decision modules in the second device to obtain related data. This is not limited.

The communication system may be further applied to an O-RAN architecture. FIG. 3 is a diagram of an O-RAN architecture according to an embodiment of this application. As shown in FIG. 3, the second device may be an intent owner, and the intent owner may be equivalent to the intent consumer, and has a same function or effect as the intent consumer. This is not limited. The first device may include a first functional entity, a second functional entity, and a first application, or a combination of the first functional entity, the second functional entity, and the first application may implement a same function or effect as the first device. The first functional entity may be a Non-RT RIC, the second functional entity may be a Near-RT RIC, and the first application may be an extended application (extended Application, XAPP), for example, an XAPP 1.

The Non-RT RIC is a functional module of an operator centralized SMO framework, and its main functions include non-real-time control and optimization of RAN elements and resources (with a control loop latency > 1s), AI/ML workflows (including model training and updating), and policy-based applications/functions.

The Near-RT RIC is a component in the O-RAN architecture, and its main functions include near-real-time intelligent control and coordination within a RAN (with a control loop latency ≥ 10 ms and < 1s) to support network automation and optimization. The Near-RT RIC may be independently deployed on a cloud platform, or the Near-RT RIC and the SMO may be deployed on a same device. This is not limited. The XAPP is an application designed to run on a near-real-time RAN intelligent controller, may include one or more microservices, is independent of the near-real-time RAN intelligent controller, and may be provided by any third party. The E2 interface may support direct association between the XAPP and a RAN function.

The intent owner may send the intent to the Non-RT RIC. The Non-RT RIC translates the received intent into an A1 policy (A1 policy), and sends the A1 policy to the Near-RT RIC through the A1 interface to select an appropriate XAPP for execution. For example, the XAPP 1 may convert the A1 policy into an execution solution, and deliver the execution solution to the E2 node through the E2 interface for execution (not shown in FIG. 3). The Near-RT RIC may feed back an execution result of the A1 policy (A1 policy feedback) to the Non-RT RIC, and the Non-RT RIC may feed back an intent execution result (intent feedback) to the intent owner.

In this architecture, the third device may be another XAPP that runs on the Near-RT RIC and that is different from the XAPP 1, for example, an XAPP 2. The XAPP 2 may have a pre-evaluation function, for example, a service having a network digital twin-related function. This is not limited.

It should be understood that, in embodiments of this application, names of nodes, modules, devices, or network elements in different scenarios, architectures, or systems, and names of communication interfaces between any two of the node, the module, the device, or the network element are provided as examples, and a possibility of a name change in a future communication system, scenario, or architecture is not excluded.

In the communication system, a first device may send, to a second device based on a first request message, first information and a plurality of identifiers in a one-to-one correspondence with the plurality of intent solutions, where the first information includes whether an estimated intent expectation during execution of each of a plurality of intent solutions used to implement a first intent instance satisfies each of at least one intent expectation. The second device may determine, from the plurality of intent solutions based on the first information and the plurality of identifiers, an intent solution to be executed, and feed back a corresponding first identifier. In this way, the first device may directly determine, based on the first identifier, the intent solution to be executed, without adjusting the intent execution solution multiple times to fulfill each of the at least one intent expectation, thereby improving intent execution efficiency and reducing resource overhead.

It may be understood that FIG. 1 to FIG. 3 are simplified diagrams of examples for ease of understanding. The communication system may further include another device, network element, or functional entity, which is not shown in FIG. 1 to FIG. 3.

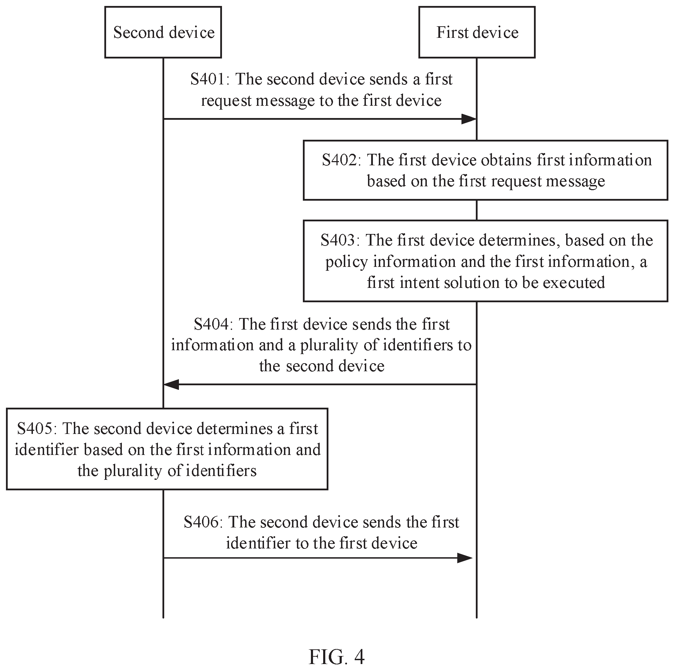

For ease of understanding, the following specifically describes the communication method provided in embodiments of this application with reference to FIG. 4 to FIG. 8C.

For example, FIG. 4 is a first schematic flowchart of a communication method according to an embodiment of this application. The method may be applied to the foregoing communication system, and relates to interaction between the first device, the second device, and the third device.

Specifically, as shown in FIG. 4, a procedure of the communication method is as follows.

S401: The second device sends a first request message to the first device. Correspondingly, the first device receives the first request message from the second device.

It may be understood that the first device and the second device may be applied to the 3GPP architecture shown in FIG. 2 or the O-RAN architecture shown in FIG. 3. The following uses the following two cases as examples to describe a process in which the second device sends the first request message to the first device.

Case a: The first device and the second device may be applied to the 3GPP architecture shown in FIG. 2. In other words, the first device may be an intent producer, and the second device may be an intent consumer.

The intent consumer sends the first request message to the intent producer. Correspondingly, the intent producer receives the first request message from the intent consumer.

Case b: The first device and the second device may be applied to the O-RAN architecture shown in FIG. 3. In other words, the first device may include a first functional entity, a second functional entity, and a first application, and the second device may be an intent owner.

That is, the intent owner may send the first request message to the first functional entity. Correspondingly, the first functional entity receives the first request message from the intent owner.

With reference to the foregoing two cases, the following describes the first request message.

The first request message may be used to request to create a first intent instance, and the first intent instance includes at least one intent expectation.

In a possible design solution, the first request message includes a first intent expression, and the first intent expression is used to request to create the first intent instance.

The first intent expression may include at least one intent expectation, at least one expectation target, an expectation object, and a context of the intent, the intent expectation, and the expectation target, and has specific syntax and semantics. The at least one intent expectation included in the first intent expression is the at least one intent expectation included in the first intent instance.

It may be understood that one expression may include at least one intent expectation, and each intent expectation corresponds to at least one expectation target. For example, it is assumed that an intent expression #1 includes an intent expectation #1 and an intent expectation #2. The intent expectation #1 may be to ensure user experience, and an expectation target corresponding to the intent expectation #1 may be: a downlink rate of a cell #1 is greater than or equal to A million bits per second (million bits per second, Mb/S). The intent expectation #2 may be to save energy for the cell #1, and an expectation target corresponding to the intent expectation #2 may be: an energy efficiency target (that is, RANEnergyEfficiency) of the cell #1 is greater than or equal to B million bits per joule (Mb/J), and an energy consumption target (that is, RANEnergyConsumption) of the cell #1 is less than or equal to C joules per second (J/S). In other words, the first intent instance includes the intent expectation #1 and the intent expectation #2. The expectation object is the cell #1, and the cell #1 can provide a service for a user.

The first device may create the first intent instance based on the first request message, and create a corresponding intent context. It may be understood that the first intent instance may be an intent instance related to a service, or may be an intent instance used for network construction. This is not limited.

With reference to the first request message including the first intent expression, the following describes the first request message in detail by using the following two cases.

Case 1: The first request message includes policy information.

The policy information may indicate a policy for selecting an intent solution to be executed. In other words, the second device generates the policy information, and the policy information may indicate a policy for selecting an intent solution to be executed. The following describes the policy information in detail.

The policy information may include at least one of the following: resource policy information, time policy information, or priority policy information.

The resource policy information may indicate to perform selection based on an occupied resource amount. For example, if the second device determines that another intent is to be delivered subsequently or another intent instance needs to be created subsequently, for example, the second device determines that there will be a new service requirement subsequently, the resource policy information may be configured as a low (or small) available resource amount or a low occupied resource amount. In this case, the first device may select an intent solution that occupies a low resource amount and that can satisfy a basic intent as an intent solution to be executed, satisfying the basic intent may be understood as satisfying or achieving a target value of each expectation target corresponding to each intent expectation included in the intent expression. For example, it is necessary to simultaneously satisfy that the downlink rate of the cell #1 is equal to A Mb/s, the energy efficiency target of the cell #1 is equal to B Mb/J, and the energy consumption target of the cell #1 is less than or equal to C J/S. It is assumed that A may be equal to 5, B may be equal to 0.01, and C may be equal to 1000.

If the second device determines that no other intent is to be subsequently delivered or no other intent instance needs to be created, for example, the second device determines that there will be no new service requirement subsequently, the resource policy information may be configured as a high (or more) available resource amount or a high occupied resource amount. The first device may select an intent solution that occupies a high resource amount and can fulfill a better effect as an intent solution to be executed. Fulfilling the better effect may be understood as being greater than or greater than a target value of an expectation target corresponding to each intent included in the intent expression. For example, the downlink rate of the cell #1 is equal to 10 Mb/s, the energy efficiency target of the cell #1 is equal to 0.05 Mb/J, and the energy consumption target of the cell #1 is equal to 2000 J/S. For another example, it is ensured that the downlink rate of the cell #1 is equal to 5 Mb/s, the energy efficiency target of the cell #1 is equal to 0.02 Mb/J, and the energy consumption target of the cell #1 is equal to 1500 J/S. This is not limited.

It may be understood that the resource may include a resource block (resource block, RB), a transmission bandwidth, a frequency band, a central processing unit (central processing unit, CPU), a graphics processing unit (graphics processing unit, GPU), a memory, or the like. This is not limited.

The time policy information may indicate to perform selection based on preset execution time (or execution tolerance time) of the first intent instance. The execution time is used to represent that each intent expectation in the at least one intent expectation needs to be satisfied within the execution time. That is, when the intent solution is executed, all intent expectations in the intent expression need to be satisfied simultaneously within the execution time, or a target value of each expectation target corresponding to each of all intent expectations in the intent expression need to be satisfied simultaneously. For example, the execution time is 30 minutes. In this case, within 30 minutes after the second device delivers the first intent expression, the intent solution executed by the first device needs to achieve effects that the downlink rate of the cell #1 is greater than or equal to 5 Mb/s, the energy efficiency target of the cell #1 is greater than or equal to 0.01 Mb/J, and the energy consumption target of the cell #1 is less than or equal to 1000 J/S.

If the first request message includes the execution time, that is, the second device delivers the execution time, the time policy information may be configured to be time-sensitive. The first device may select an intent solution that satisfies a short time and fulfills a basic intent in as an intent solution to be executed. Satisfying a short time and fulfilling a basic intent may be understood as that a target value of each expectation target corresponding to each intent expectation can be satisfied simultaneously within a period less than or equal to the execution time. For example, the following can be implemented 20 minutes after the intent solution is executed: The downlink rate of the cell #1 is equal to 5 Mb/s, the energy efficiency target of the cell #1 is equal to 0.01 Mb/s, and the energy consumption target of the cell #1 is equal to 1000 J/S.

If the first request message does not include the execution time, that is, the second device does not deliver the execution time, the time policy information may be configured to be time-insensitive. The first device may select an intent solution that satisfies a long time and fulfills a better effect as an intent solution to be executed. Satisfying a long time and fulfilling a better effect may be understood as selecting a target value having long execution time and greater than or exceeding each expectation target corresponding to each of all intent expectations. For example, when the intent solution is executed for 45 minutes, the following may be implemented: The downlink rate of the cell #1 is equal to 25 Mb/s, the energy efficiency target of the cell #1 is equal to 0.07 Mb/J, and the energy consumption target of the cell #1 is equal to 500 J/S. This is not limited.

The priority policy information may indicate to perform selection based on a priority sequence of each intent expectation of the at least one intent expectation. It may be understood that each intent expectation corresponds to one priority. For example, the first device may use a priority corresponding to each intent expectation according to a sequence of delivering the intent expectation. For example, the second device first delivers the intent expectation #1, and then the second device delivers the intent expectation #2. Then, a priority of the intent expectation #1 is higher than the intent expectation #2. The priority policy information may be configured to ensure a high-priority intent expectation. In this case, the second device may use, based on a priority sequence of each intent expectation, an intent solution that fulfills a better effect for a high-priority intent expectation as an intent solution to be executed.

It may be understood that the resource policy information, the time policy information, and the priority policy information may be used in combination. An implementation principle of the resource policy information, the time policy information, and the priority policy information is similar to an implementation process in which the first device uses the resource policy information alone to select an intent solution to be executed, the first device uses the time policy information alone to select an intent solution to be executed, or the first device uses the priority policy information alone to select an intent solution to be executed. References may be made for understanding, and details are not described. For example, if the policy information configured by the second device is occupying a low resource amount, time-sensitive, and ensuring a high-priority intent expectation, the first device may select an intent solution that occupies a low resource amount and that fulfills a better effect for a high-priority intent expectation, as an intent solution to be executed.

It may be understood that, in the foregoing case a, the intent producer may store the policy information, so as to subsequently select an intent solution to be executed. In the foregoing case b, the first functional entity may send the policy information to the second functional entity, and the second functional entity stores the policy information, so that the intent producer subsequently selects the intent solution to be executed.

It should be understood that in embodiments of this application, the "intent solution", the "intent execution solution", the "execution solution", and the like may be replaced with each other. Details are not described subsequently.

Case 2: The first request message does not include the policy information.

In other words, the second device does not deliver the policy information to the first device.

It may be understood that a name of the first request message is merely an example, and the first request message may be alternatively replaced with any other possible name, for example, a first request or a request message #1. This is not limited.

S402: The first device obtains first information based on the first request message.

It may be understood that before the first information is described, in a possible design solution, before the first device sends the first information and a plurality of identifiers to the second device, the method further includes:

The first device generates the plurality of intent solutions based on the first intent instance.

Details are described below.
(1) Based on the foregoing case a, the intent producer may translate the first intent instance into a plurality of intent solutions. The intent solutions may represent internal logic or a command sequence that needs to be executed. The plurality of intent solutions may be used to implement the first intent instance, or the plurality of intent solutions are used to implement an intent expectation corresponding to the first intent instance. For example, the intent producer may generate an intent solution #1, an intent solution #2, and an intent solution #3 based on the intent instance #1.
(2) Based on the foregoing case b, the first application may generate a plurality of intent solutions based on the first intent instance forwarded by the first functional entity by using the second functional entity.

For example, the first functional entity may generate an A1 policy based on the first intent instance. The A1 policy is in a declarative policy expression form, and the A1 policy may include a policyTypeId, a policyId, and a policyObject. The policyObject may include an application scope of the policy A1, a target of the policy A1, and a resource of the policy A1. For specific descriptions, refer to the descriptions of the foregoing technical terms. Details are not described again.

The first functional entity may send the A1 policy to the second functional entity, and the second functional entity may send, based on content of the A1 policy, the A1 policy to an appropriate application, for example, the first application. The first application may translate the A1 policy to generate a plurality of intent solutions, where the plurality of intent solutions may be control messages for the E2 node.

It may be understood that this embodiment of this application is described by using a case in which the first device generates a plurality of intent solutions. Details are not described subsequently.

The first device may invoke an internal service or an external service to obtain the first information. The following uses the following two manners as an example to describe in detail an implementation process in which the first device obtains the first information.

Manner 1: The first device generates the first information based on the plurality of intent solutions.
(1) Based on the foregoing case a, the intent producer may generate the first information based on the plurality of intent solutions. For example, the intent producer may pre-evaluate estimated intent expectations of the plurality of intent solutions by invoking an internal service, for example, components such as perception, analysis, and decision, to obtain the first information. The first information may indicate whether an estimated intent expectation during execution of each of the plurality of intent solutions satisfies each of the at least one intent expectation. Details are described below.

In a possible design solution, the first information includes first indication information and/or an expected value list.

The first indication information may indicate whether an estimated intent expectation during execution of each of the plurality of intent solutions satisfies each of the at least one intent expectation. The satisfying each of the at least one intent expectation may be understood as that all intent expectations in the first intent instance need to be satisfied simultaneously, or each expectation target corresponding to each of all intent expectations in the first intent instance needs to be satisfied simultaneously. For example, each expectation target corresponding to each of the plurality of estimated intent expectations during execution of the intent solution can satisfy each expectation target in the first intent instance.

In other words, the first indication information may indicate an intent satisfaction status of each intent solution, the first indication information may include a plurality of pieces of sub-indication information, and each piece of sub-indication information may correspond to one intent solution. For example, the first indication information may include sub-indication information #1, sub-indication information #2, and sub-indication information #3. The sub-indication information #1 may indicate whether an estimated intent expectation during execution of the intent solution #1 satisfies each of the at least one intent expectation. The sub-indication information #2 may indicate whether an estimated intent expectation during execution of the intent solution #2 satisfies each of the at least one intent expectation. The sub-indication information #3 may indicate whether an estimated intent expectation during execution of the intent solution #3 satisfies each of the at least one intent expectation.

For example, it is assumed that an estimated intent expectation #1 during execution of the intent solution #1 is: the downlink rate of the cell #1 is equal to 10 Mb/s, and an estimated intent expectation #2 during execution of the intent solution #1 is: the energy efficiency target of the cell #1 is equal to 0.02 Mb/J and the energy consumption target of the cell #1 is equal to 1200 J/S. In this case, the intent solution #1 cannot satisfy the expectation target of the intent expectation #2, and the sub-indication information #1 may indicate that the estimated intent expectation during execution of the intent solution #1 cannot satisfy each of the at least one intent expectation. An estimated intent expectation #1 during execution of the intent solution #2 is: the downlink rate of the cell #1 is equal to 3 Mb/s, and an estimated intent expectation #2 during execution of the intent solution #2 is: the energy efficiency target of the cell #1 is equal to 0.005 Mb/J and the energy consumption target of the cell #1 is equal to 900 J/S. In this case, the intent solution #2 cannot satisfy the expectation targets of the intent expectation #1 and the intent expectation #2. The sub-indication information #2 may indicate that the estimated intent expectation during execution of the intent solution #2 cannot satisfy each of the at least one intent expectation. It is assumed that an estimated intent expectation #1 during execution of the intent solution #3 is: the downlink rate of the cell #1 is equal to 15 Mb/s, and an estimated intent expectation #2 during execution of the intent solution #3 is: the energy efficiency target of the cell #1 is equal to 0.05 Mb/J and the energy consumption target of the cell #1 is equal to 500 J/S. In this case, the intent solution #3 can simultaneously satisfy expectation targets corresponding to the intent expectation #1 and the intent expectation #2, and the sub-indication information #3 may indicate that the estimated intent expectation during execution of the intent solution #3 can satisfy each of the at least one intent expectation.

It may be understood that a name of the first indication information is merely an example, and the first indication information may be alternatively replaced with any other possible name, for example, an intent satisfaction status of an intent solution, or indication information #1. This is not limited.

The expected value list may indicate an expected target value of an estimated intent expectation during execution of each of the plurality of intent solutions, and the expected target value of the estimated intent expectation may include an optimal expected target value corresponding to each estimated expectation. The optimal expected target value may indicate an expected target value that is implemented by the second device or the third device in a best effort manner when evaluating the intent solution, or may be a value that can be implemented in a best effort manner when the expected target value cannot be fulfilled, for example, the downlink rate of the cell #1 is equal to 9 Mb/s, or may be a value that can be implemented in a best effort manner when the expected target value can be fulfilled, for example, the downlink rate of the cell #1 is equal to 15 Mb/s, or may include a minimum value that can satisfy the expectation target, for example, the expected target value of the cell #1 is greater than or equal to 10 Mb/s, and the minimum value of the expected target value is 10 Mb/s. This is not limited.

The expected value list may include an optimal expected target value of an expectation target corresponding to each estimated intent expectation during execution of each solution. For example, the expected value list may include a plurality of expectation value sublists, and each expectation value sublist may correspond to one intent solution. It should be noted that the optimal expected target value may be greater than a corresponding expected target value in the first intent instance, for example, the downlink rate of the cell #1 is equal to 15 Mb/s, or the optimal expected target value may be less than a corresponding expected target value in the first intent instance, for example, the energy efficiency target of the cell #1 is equal to 0.05 Mb/J. This is not limited.

For example, the expected value list may include an expectation value sublist #1, an expectation value sublist #2, and an expectation value sublist #3. The expectation value sublist #1 may indicate an expected target value of the estimated intent expectation during execution of the intent solution #1, the expectation value sublist #2 may indicate an expected target value of the estimated intent expectation during execution of the intent solution #2, and the expectation value sublist #3 may indicate an expected target value of the estimated intent expectation during execution of the intent solution #3. For example, the expectation value sublist #1 may include: the downlink rate is equal to 10 Mb/s, the energy efficiency target is equal to 0.02 Mb/J, and the energy consumption target is equal to 1200 J/S; the expectation value sublist #2 may include: the downlink rate is equal to 3 Mb/s, the energy efficiency target is equal to 0.005 Mb/J, and the energy consumption target is equal to 900 J/S; and the expectation value sublist #3 may include: the downlink rate is equal to 15 Mb/s, the energy efficiency target is equal to 0.05 Mb/J, and the energy consumption target is equal to 500 J/S.

It may be understood that, an expectation target that is not fulfilled may be marked in the expected value list. For example, the expectation value sublist #1 may mark that a target of the energy consumption target of the cell #1 being less than or equal to 0.01 Mb/S is not fulfilled; and the expectation value sublist #2 may mark that a target of the downlink rate being greater than or equal to 3 Mb/s is not fulfilled, and a target of the consumption target being greater than or equal to 0.01 Mb/S is not achieved, so that the second device subsequently selects a solution to be executed.

It may be understood that a name of the expected value list is merely an example, and the expected value list may be replaced with any other possible name, for example, an optimal performance value list of an intent expectation target. This is not limited.

Optionally, the first information further includes resource information and/or time information.

The resource information may indicate a resource amount used to complete each of the plurality of intent solutions. The resource amount used to complete each of the plurality of intent solutions may be: when each intent solution is executed, a resource amount used or occupied when an expectation target of each intent expectation of the intent solution achieves an optimal expected target value. The resource information may include a plurality of pieces of sub-resource time, and each piece of sub-resource time may correspond to one intent solution.

For example, the resource information may include sub-resource information #1, sub-resource information #2, and sub-resource information #3. The sub-resource information #1 may indicate a resource amount used to complete the intent solution #1, the sub-resource information #2 may indicate a resource amount used to complete the intent solution #2, and the sub-resource information #3 may indicate a resource amount used to complete the intent solution #3. It is assumed that when the intent solution #1 is executed, 15 RBs need to be occupied when the downlink rate of the cell #1 is equal to 10 Mb/s, the energy efficiency target of the cell #1 is equal to 0.02 Mb/J, and the energy consumption target of the cell #1 is equal to 1200 J/S. Then, the sub-resource information #1 may be 15 RBs. It is assumed that when the intent solution #2 is executed, 10 RBs need to be occupied when the downlink rate of the cell #1 is equal to 3 Mb/s, the energy efficiency target of the cell #1 is equal to 0.005 Mb/J, and the energy consumption target of the cell #1 is equal to 900 J/S. Then, the sub-resource information #2 may be 10 RBs. It is assumed that when the intent solution #3 is executed, 30 RBs need to be occupied when the downlink rate of the cell #1 is equal to 15 Mb/s, the energy efficiency target of the cell #1 is equal to 0.02 Mb/J, and the energy consumption target of the cell #1 is equal to 500 J/S. Then, the sub-resource information #3 may be 30 RBs.

It may be understood that a name of the resource information is merely an example, and the resource information may be alternatively replaced with any other possible name, for example, a resource usage amount. This is not limited.

The time information may indicate time used to complete each of the plurality of intent solutions, and the time used to complete each of the plurality of intent solutions may be: when each intent solution is executed, time used when an expectation target of each intent expectation of the intent solution achieves an optimal expected target value. The time information may include a plurality of pieces of sub-time information, and each piece of sub-time information may correspond to one intent solution.

For example, the time information may include sub-time information #1, sub-time information #2, and sub-time information #3. The sub-time information #1 may indicate time used to complete the intent solution #1, the sub-time information #2 may indicate time used to complete the intent solution #2, and the sub-time information #3 may indicate time used to complete the intent solution #3. It is assumed that when the intent solution #1 is executed, it takes 35 minutes when the downlink rate of the cell #1 is equal to 10 Mb/s, the energy efficiency target of the cell #1 is equal to 0.02 Mb/J, and the energy consumption target of the cell #1 is equal to 1200 J/S. Then, the sub-time information #1 may be 35 minutes. It is assumed that when the intent solution #2 is executed, it takes 25 minutes when the downlink rate of the cell #1 is equal to 3 Mb/s, the energy efficiency target of the cell #1 is equal to 0.005 Mb/J, and the energy consumption target of the cell #1 is equal to 900 J/S. Then, the sub-time information #2 may be 25 minutes. It is assumed that when the intent solution #3 is executed, it takes 55 minutes when the downlink rate of the cell #1 is equal to 15 Mb/s, the energy efficiency target of the cell #1 is equal to 0.02 Mb/J, and the energy consumption target of the cell #1 is equal to 500 J/S. Then, the sub-time information #3 may be 55 minutes.

It may be understood that each of the plurality of intent solutions corresponds to one piece of first sub-information, and each piece of first sub-information includes corresponding sub-indication information, an expectation value sublist, sub-resource information, and sub-time information. For example, the first information includes first sub-information #1, first sub-information #2, and first sub-information 3. The first sub-information #1 corresponds to the intent solution #1, the first sub-information #2 corresponds to the intent solution #2, and the first sub-information #3 corresponds to the intent solution #3. In other words, the first sub-information #1 may include sub-indication information #1, an expectation value sublist #1, sub-resource information #1, and sub-time information #1; the first sub-information #2 may include sub-indication information #2, an expectation value sublist #2, sub-resource information #2, and sub-time information #2; and the first sub-information #3 may include sub-indication information #3, an expectation value sublist #3, sub-resource information #3, and sub-time information #3.

In other words, the sub-first information #1 may include: the estimated intent expectation during execution of the intent solution #1 cannot satisfy each of the at least one intent expectation; the downlink rate is equal to 10 Mb/s, the energy efficiency target is equal to 0.02 Mb/J, and the energy consumption target is equal to 1200 J/S; 15 RBs; and 35 minutes. The sub-first information #2 may include: the estimated intent expectation during execution of the intent solution #2 cannot satisfy each of the at least one intent expectation; the downlink rate is equal to 3 Mb/s, the energy efficiency target is equal to 0.005 Mb/J, and the energy consumption target is equal to 900 J/S; 10 RBs; and 25 minutes. The sub-first information #3 may include: the estimated intent expectation during execution of the intent solution #3 can satisfy each of the at least one intent expectation; the downlink rate is equal to 15 Mb/s, the energy efficiency target is equal to 0.05 Mb/J, and the energy consumption target is equal to 500 J/S; 30 RBs; and 55 minutes.

It may be understood that a name of the time information is merely an example, and the time information may be alternatively replaced with any other possible name, for example, intent execution time. This is not limited.

Manner 2: The first device sends a second request message to the third device. Correspondingly, the third device receives the second request message from the first device.

The third device generates the first information based on the second request message.

The third device obtains, based on the expectation object information, the estimated intent expectation during execution of each of the plurality of intent solutions.

The third device generates the first information based on the estimated intent expectation during execution of each of the intent solutions and the expectation list.

The third device sends the first information to the first device. Correspondingly, the first device receives the first information returned by the third device based on the second request message.

Details are described below.
(1) Based on the foregoing case a, the third device may be a third-party pre-evaluation system or an intent pre-evaluation system, for example, a digital twin system, a knowledge base, or an AI model with a pre-evaluation function. This is not limited. For ease of understanding, the following uses an example in which the third device is an intent pre-evaluation system for subsequent description.

The second request message may include a plurality of intent solutions. The second request message is used to request to obtain estimated intent expectations during execution of the plurality of intent solutions. For example, the second request message may include an intent solution #1, an intent solution #2, and an intent solution #3. The second request message may be used to request to obtain an estimated intent expectation during execution of the intent solution #1, an estimated intent expectation during execution of the intent solution #2, and an estimated intent expectation during execution of the intent solution #3.

Optionally, the second request message may further include an expectation list and/or expectation object information.

The expectation list may indicate at least one intent expectation, or in other words, the expectation list may indicate all intent expectations of the first intent instance, or in other words, the expectation list may indicate all expectation targets of the first intent instance. For example, the expectation list may include: the downlink rate of the cell #1 is greater than or equal to 5 Mb/s, the energy efficiency target of the cell #1 is greater than or equal to 0.01 Mb/J, and the energy consumption target of the cell #1 is less than or equal to 1000 J/S.

The expectation object information may indicate an object that executes the first intent instance, for example, the cell #1. In this case, the intent pre-evaluation system may obtain related network configuration information and network and service indicator statistics values based on the expectation object information and the expectation list, evaluate each intent solution, to obtain the first information, and feed back the first information to the intent producer.

(2) Based on the foregoing case b, that the first device sends the second request message to the third device includes:
The first application sends the second request message to the third device. Correspondingly, the third device receives the second request message from the first application.

That the first device receives the first information returned by the third device based on the second request message includes:
The first functional entity receives the first information forwarded by the third device by using the second functional entity.

The third device may be an application that runs on the second functional entity and that is different from the first application, for example, a second application. The second application may have a pre-evaluation function. In this case, the second request message may include an A1 policy target list and object information. The A1 policy target list corresponds to the expectation list. In other words, the A1 policy target list and the expectation list may be converted to each other, the object information corresponds to the expectation object information, and the object information may be executed E2 node information. The second application may obtain related network configuration information and network and service indicator statistics values based on the object information, and evaluate each intent solution to obtain estimation information. The estimation information may include the indication information #1, the A1 policy target list, the resource information #1, and the time information #1.

The indication information #1 may indicate whether a target of an estimated A1 policy during execution of each of the plurality of intent solutions satisfies each target of the A1 policy. The satisfying each target of the A1 policy is understood as that each target of the A1 policy needs to be satisfied simultaneously. It may be understood that the indication information #1 is similar to the first indication information. References may be made for understanding, and details are not described.

The A1 policy target list may indicate a target value of the estimated A1 policy during execution of each of the plurality of intent solutions, and the expected target value of the estimated intent expectation may include an optimal expected target value corresponding to the target value of each estimated A1 policy. It may be understood that, the A1 policy target list is similar to the foregoing expected value list. References may be made for understanding, and details are not described.

It may be understood that the resource information #1 is similar to the foregoing resource information, and the time information #1 is similar to the foregoing time information. References may be made for understanding, and details are not described.

The second application may send the estimation information to the second functional entity, the second functional entity may forward the estimation information to the first functional entity, and the first functional entity converts the estimation information into the corresponding first information.

With reference to manner 2, optionally, the method further includes: the third device sends a plurality of identifiers to the first device. Correspondingly, the first device receives the plurality of identifiers from the third device.

The plurality of identifiers are in a one-to-one correspondence with the plurality of intent solutions, that is, one identifier indicates one intent solution, and one intent solution corresponds to one piece of first sub-information. Therefore, the plurality of identifiers are in a one-to-one correspondence with the plurality of pieces of first sub-information. For example, the plurality of identifiers are respectively a first identifier, a second identifier, and a third identifier. Assuming that the first identifier corresponds to the intent solution #1, the second identifier corresponds to the intent solution #2, and the third identifier corresponds to the intent solution #3, the first identifier, the intent solution #1, and the sub-first information #1 may correspond to each other; the second identifier, the intent solution #2, and the sub-first information #2 may correspond to each other; and the third identifier, the intent solution #3, and the sub-first information #3 may correspond to each other.

It may be understood that in this embodiment of this application, the "identifier", the "intent identifier", the "solution identifier", the "intent solution identifier", and the like may be replaced with each other. Details are not described subsequently. It may be understood that a name of the first information is merely an example, and the first information may be alternatively replaced with any other possible name, for example, intent expectation information. This is not limited.

S403: The first device determines, based on the policy information and the first information, a first intent solution to be executed.

It should be noted that this step is implemented based on the foregoing case 1. To be specific, when the first request message includes the policy information, the first device may determine, based on the policy information and the first information, the first intent solution to be executed.

For example, the first device may determine, based on a parameter of each piece of sub-information in the first information, whether an estimated intent expectation during execution of an intent solution among the plurality of intent solutions can satisfy each of the at least one intent expectation. Details are described below.
(1) If an estimated intent expectation during execution of only one intent solution among the plurality of intent solutions can satisfy each of the at least one intent expectation, the first device may directly select the intent solution as an intent solution that needs to be subsequently executed, for example, the first intent solution.

For example, based on the foregoing case a, if the intent producer determines, based on the first information, that an estimated intent expectation during execution of only one intent solution among the plurality of intent solutions can satisfy each of the at least one intent expectation, the intent producer may determine the intent solution as the first intent solution.

Based on the foregoing case b, if the second functional entity determines, based on the estimation information, that a target of an estimated A1 policy during execution of only one intent solution among the plurality of intent solutions can satisfy each target of the A1 policy, the second functional entity may directly determine the intent solution as the first intent solution.

(2) If estimated intent expectations during execution of at least two intent solutions among the plurality of intent solutions can satisfy each of the at least one intent expectation, the first device may select one intent solution from the at least two intent solutions as the first intent solution based on the policy information. That is, the first intent solution is one of the at least two intent solutions.

For example, based on the foregoing case a, if the intent producer determines, based on the first information, that the estimated intent expectations during execution of the at least two intent solutions among the plurality of intent solutions can satisfy each of the at least one intent expectation, the intent producer may select one intent solution from the at least two intent solutions as the first intent solution based on the policy information.

It may be understood that for a specific implementation process of the process, refer to related descriptions of the following step S507a. Details are not described herein.

Based on the foregoing case b, if the second functional entity determines, based on the estimation information, that targets of estimated A1 policies during execution of at least two intent solutions among the plurality of intent solutions can satisfy each target of the A1 policy, the second functional entity may select one intent solution from the at least two intent solutions as the first intent solution based on the policy information.

It may be understood that, for a specific implementation process of the process, refer to descriptions in the following steps S711a1 and S711a2. Details are not described herein.

(3) If no estimated intent expectation during execution of any intent solution among the plurality of intent solutions can satisfy each of the at least one intent expectation, the first device may send the first information to the second device, so that the second device subsequently determines, based on the first information, an intent solution to be executed. For specific descriptions of the process, refer to related descriptions in the following step S404. Details are not described herein.

S404: The first device sends the first information and the plurality of identifiers to the second device.

It should be noted that, this step is implemented based on the foregoing case 1, and no estimated intent expectation during execution of any intent solution among the plurality of intent solutions can satisfy each of the at least one intent expectation, or this step is implemented based on the foregoing case 2.

Based on the foregoing case a, the intent producer may send the first information and the plurality of identifiers to the intent consumer, and the plurality of identifiers may be in a one-to-one correspondence with the plurality of pieces of sub-first information in the first information.

Based on the foregoing case b, the first functional entity may translate the estimation information to obtain the first information, and send the first information and the plurality of identifiers to the intent owner. The plurality of identifiers may be in a one-to-one correspondence with the plurality of pieces of first sub-information in the first information.

S405: The second device determines a first identifier based on the first information and the plurality of identifiers.

The following uses the following cases as examples for specific descriptions.

Case 3: Based on the foregoing case 1, that is, the second device configures the policy information for the first device, but the first device determines that no estimated intent expectation during execution of any intent solution among the plurality of intent solutions can satisfy each of the at least one intent expectation. In this case, an estimated intent expectation during execution of an intent solution among the plurality of intent solutions can partly satisfy each of the at least one intent expectation. Then, the second device may select, based on an intent expectation preference of the second device from the plurality of intent solutions that can partly satisfy the intent expectation, an intent solution to be executed. If the second device may determine, based on the intent expectation preference of the second device, that an optimal value of each expectation target in the sub-first information corresponding to the first identifier better satisfies the intent expectation preference of the second device, the second device may determine the first identifier.

It may be understood that, if the second device stores the policy information, the second device may further select, with reference to the intent expectation preference of the second device and the policy information, the intent solution to be executed. An implementation principle thereof is similar to the following steps S507b1 to S507b5 or the following steps S711b1 to S711b8. References may be made for understanding, and details are not described.

Case 4: Based on the foregoing case 2, that is, the second device does not configure the policy information for the first device, the second device may determine, based on the first information, whether an estimated intent expectation during execution of an intent solution among the plurality of intent solutions can satisfy each of the at least one intent expectation.
(1) If estimated intent expectations during execution of at least two intent solutions among the plurality of intent solutions can satisfy each of the at least one intent expectation, the second device may select, from the at least two intent solutions based on the intent expectation preference of the second device, the intent solution to be executed. If the second device determines that an optimal value of each expectation target in the sub-first information corresponding to the first identifier better satisfies the intent expectation preference of the second device, the second device may determine the first identifier. It may be understood that the first identifier corresponds to the first intent solution. Therefore, the first intent solution may be one of the at least two intent solutions.
   It may be understood that, if the second device stores the policy information, the second device may further select, with reference to the intent expectation preference of the second device and the policy information, the intent solution to be executed. An implementation principle thereof is similar to the following steps S608a1 and S608a2 or the following steps S813a1 to S813a4. References may be made for understanding, and details are not described.
(2) If no estimated intent expectation during execution of any intent solution among the plurality of intent solutions can satisfy each of the at least one intent expectation, the second device may select, based on an intent expectation preference of the second device from the plurality of intent solutions that can partly satisfy the intent expectation, an intent solution to be executed. If the second device may determine, based on the intent expectation preference of the second device, that an optimal value of each expectation target in the sub-first information corresponding to the first identifier better satisfies the intent expectation preference of the second device, the second device may determine the first identifier.

It may be understood that, if the second device stores the policy information, the second device may further select, with reference to the intent expectation preference of the second device and the policy information, the intent solution to be executed. An implementation principle thereof is similar to the following steps S608b1 to S608b4 or S813b1 to S813b6. References may be made for understanding, and details are not described.

S406: The second device sends the first identifier to the first device. Correspondingly, the first device receives the first identifier from the second device.

The first device may determine, from the plurality of intent solutions based on the first identifier, that the first intent solution is the intent solution to be executed. For example, if the first identifier is the identifier #1, the first device may determine, based on the identifier #1, that the intent solution #3 is the intent solution to be executed.

Details are described below.
(1) Based on the foregoing case a, the intent consumer may send the first identifier to the intent producer, so that the intent producer determines the first intent solution. After the intent producer determines the first intent solution, the intent producer may execute the first intent solution. For example, the intent producer may send a corresponding control message to the expectation object based on internal logic or a command sequence corresponding to the first intent solution. For an implementation process of this process, refer to an implementation process of executing the intent solution by the intent producer in the conventional technology. Details are not described again.
(2) Based on the foregoing case b, the intent owner may send the first identifier to the first functional entity, the first functional entity forwards the first identifier to the second functional entity, and the second functional entity forwards the first identifier to the first application, so that the first application determines the first intent solution. After the first application determines the first intent solution, the first application may execute the first intent solution. For example, the first application may send a corresponding control message to a corresponding E2 node based on a control message for the E2 node in the first intent solution. For an implementation process of this process, refer to an implementation process of the extended application execution intent solution in the conventional technology. Details are not described again.

In conclusion, a first device may send, to a second device based on a first request message, first information and a plurality of identifiers in a one-to-one correspondence with the plurality of intent solutions, where the first information includes whether an estimated intent expectation during execution of each of a plurality of intent solutions used to implement a first intent instance satisfies each of at least one intent expectation. The second device may determine, from the plurality of intent solutions based on the first information and the plurality of identifiers, an intent solution to be executed, and feed back a corresponding first identifier. In this way, the first device may directly determine, based on the first identifier, the intent solution to be executed, without adjusting the intent execution solution multiple times to fulfill each of the at least one intent expectation, thereby improving intent execution efficiency and reducing resource overhead.

With reference to the foregoing embodiment, optionally, the first identifier corresponds to the first intent solution, and when no estimated intent expectation during execution of any one of the plurality of intent solutions satisfies each of the at least one intent expectation, the method further includes:
The second device generates a second intent expression based on an estimated intent expectation of the first intent solution.

The second device sends the second intent expression to the first device. Correspondingly, the first device receives the second intent expression from the second device.

In other words, the second intent expression is determined based on the estimated intent expectation of the first intent solution.

It may be understood that, in the foregoing case 3 or (2) of the foregoing case 4, the second device may modify the first intent expression based on the expectation value sublist in the sub-first information corresponding to the first identifier, to obtain the second intent expression.

For example, the second device may modify the target value of the expectation target of the intent expectation that is in the first intent expression and that is not satisfied by the first intent solution to be less than or equal to a value of the expectation target in a corresponding expectation value sublist, so that the first intent solution can satisfy an intent expectation of a modified intent expression. For example, it is assumed that the first intent solution is the foregoing intent solution #1, and the sub-first information #1 corresponding to the intent solution #1 includes: an estimated intent expectation during execution of the intent solution #1 cannot satisfy each of the at least one intent expectation; a downlink rate is equal to 10 Mb/s, an energy efficiency target is equal to 0.02 Mb/S, and an energy consumption target is equal to 1200 J/S; 15 RBs; and 35 minutes. Then, the second device may modify the energy consumption target of the cell #1 in the intent expectation #2 of the first intent expression from being less than or equal to 1000 J/S to the energy consumption target of the cell #1 being less than or equal to 1200 J/S, or less than or equal to 1500 J/S, or the like. This is not limited. For ease of understanding, the following uses an example in which the energy consumption target of the cell #1 is less than or equal to 1200 J/S, and the second intent expression may include: an intent expectation #1 and an intent expectation #2. The intent expectation #1 may be to ensure user experience, and an expectation target corresponding to the intent expectation #1 may be: the downlink rate of the cell #1 is greater than or equal to 5 Mb/S. The intent expectation #2 may be to save energy for the cell #1, and an expectation target corresponding to the intent expectation #2 may be: an energy efficiency target of the cell #1 is greater than or equal to 0.01 Mb/J, and an energy consumption target of the cell #1 is less than or equal to 1200 J/S. Based on the foregoing case a, the intent consumer may generate the second intent expression based on the estimated intent expectation of the first intent solution, and send the second intent expression to the intent producer.

Based on the foregoing case b, the intent owner may generate the second intent expression based on the estimated intent expectation of the first intent solution, and send the second intent expression to the first functional entity. The first functional entity forwards the second intent expression to the second functional entity, and the second functional entity forwards the second intent expression to the first application.

Optionally, before the first device executes the first intent solution, the method further includes:
The first device modifies the first intent instance based on the second intent expression.

Based on the foregoing case a, the intent producer may modify the first intent instance based on the second intent expression, so that when subsequently executing the first intent solution, the intent producer can satisfy a requirement of an intent instance delivered by the intent consumer.

Based on the foregoing case b, the first application may modify the first intent instance based on the second intent expression, so that when subsequently executing the first intent solution, the first application can satisfy a requirement of an intent instance delivered by the intent consumer.

With reference to the method embodiment, the foregoing describes the overall process of the communication method provided in embodiments of this application. For ease of understanding, the following describes the foregoing method by using the following four scenarios as examples.

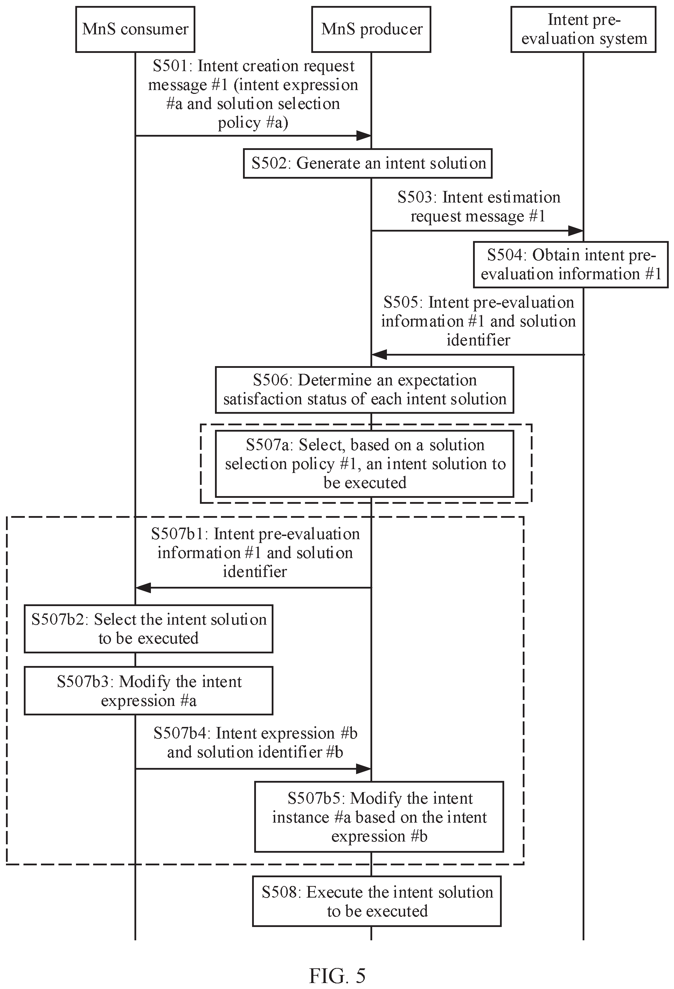

Scenario 1: FIG. 5 is a second schematic flowchart of a communication method according to an embodiment of this application. Interaction between an MnS consumer (for example, the foregoing second device), an MnS producer (for example, the foregoing first device), and an intent pre-evaluation system (for example, the foregoing third device) is mainly involved.

As shown in FIG. 5, the method may include the following steps.

S501: The MnS consumer (Consumer) sends an intent creation request message #1 to the MnS producer (Producer).

The intent creation request message #1 may include an intent expression #a and a solution selection policy #a. The intent expression #a may be used to request to create an intent instance #a. The intent expression #a may include an intent expectation #a, an intent expectation #b, and an expectation object #a. The intent expectation #a may include an expectation target #a1, and the intent expectation #b may include an expectation target #b1 and an expectation target #b2. It is assumed that a priority of the intent expectation #a is higher than a priority of the intent expectation #b.

The solution selection policy #a may be used by the MnS producer to select an intent solution to be executed, and the solution selection policy #a may include priority policy information #a and resource policy information #a. The priority policy information #a may be ensuring a high-priority intent expectation, and the resource policy information #a may be a high available resource amount.

S502: The MnS producer generates an intent solution.

The MnS producer may translate the received intent expression #a to generate an intent solution. The intent solution may represent internal logic or a command sequence that needs to be executed, and the intent solution may be used to implement a first intent instance #a. For example, the MnS producer may generate an intent solution #a, an intent solution #b, and an intent solution #c based on the intent expression #a.

S503: The MnS producer sends an intent estimation request message #1 to the intent pre-evaluation system.

The intent estimation request message #1 may include intent solutions (that is, the intent solution #a, the intent solution #b, and the intent solution #c), an intent expectation list (that is, the intent expectation #a and the intent expectation #b; or an expectation target #a1, an expectation target #b1, and an expectation target #b2), and expectation object information (that is, the expectation object #a).

It may be understood that step S503 is triggered when there are a plurality of intent execution solutions. In other words, when the MnS producer generates the plurality of intent solutions in step S502, the MnS producer is triggered to perform step S503.

S504: The intent pre-evaluation system obtains intent pre-evaluation information #1.

The intent pre-evaluation system may obtain related network configuration information and network and service indicator statistics values based on the expectation object #a, and separately pre-evaluate the intent solution #a, the intent solution #b, and the intent solution #c, to obtain the intent pre-evaluation information #1. The intent pre-evaluation information #1 may include an intent satisfaction status of each intent solution, an optimal expected target value of an expectation target of a pre-evaluation intent expectation during execution of each intent solution, a resource amount used when the expectation target of each intent expectation achieves the optimal expected target value during execution of each intent solution, and time used when the expectation target of each intent expectation achieves the optimal expected target value during execution of each intent solution. The intent satisfaction status of each intent solution may be: whether the expected intent expectation during execution of each intent solution can simultaneously satisfy the intent expectation #a and the intent expectation #b, or can simultaneously satisfy the expectation target #a1, the expectation target #b1, and the expectation target #b2.

For example, the intent pre-evaluation information #1 may include sub-intent pre-evaluation information #a, sub-intent pre-evaluation information #b, and sub-intent pre-evaluation information #c. The sub-intent pre-evaluation information #a may include the intent solution #a, an intent satisfaction status #a, an expectation target optimal performance value list #a, a resource amount #a, and time #a. The sub-intent pre-evaluation information #b may include the intent solution #b, an intent satisfaction status #b, an expectation target optimal performance value list #b, a resource amount #b, and time #b. The sub-intent pre-evaluation information #c may include the intent solution #c, an intent satisfaction status #c, an expectation target optimal performance value list #c, a resource amount #c, and time #c.

S505: The intent pre-evaluation system sends the intent pre-evaluation information #1 and a solution identifier to the MnS producer.

The intent pre-evaluation system may send the sub-intent pre-evaluation information #a, the sub-intent pre-evaluation information #b, and the sub-intent pre-evaluation information #c to the MnS producer.

A quantity of intent identifiers is in a one-to-one correspondence with a quantity of the foregoing intent solutions. In other words, the intent pre-evaluation system may send three solution identifiers to the MnS producer: a solution identifier #a, a solution identifier #b, and a solution identifier #c, respectively. The solution identifier #a may correspond to the intent solution #a and the sub-intent pre-evaluation information #a; the solution identifier #b may correspond to the intent solution #b and the sub-intent pre-evaluation information #b; and the solution identifier #c may correspond to the intent solution #c and the sub-intent pre-evaluation information #c.

S506: The MnS producer determines an expectation satisfaction status of each intent solution.

If the expected intent expectation of the intent solution can simultaneously satisfy the intent expectation #a and the intent expectation #b, it may indicate that the intent solution can satisfy all intent expectations. On the contrary, it may indicate that the intent solution cannot satisfy all intent expectations. For example, the expected intent expectation of the intent solution can satisfy the intent expectation #a or the intent expectation #b, or a fulfillment effect of the expected intent solution does not satisfy the intent expectation #a, and does not satisfy the intent expectation #b.

It may be understood that if only one intent solution among the intent solution #a, the intent solution #b, and the intent solution #c can simultaneously satisfy the intent expectation #a and the intent expectation #b, for example, the intent solution #a, the MnS producer may directly select the intent solution #a as an intent solution to be executed.

If at least two intent solutions among the intent solution #a, the intent solution #b, and the intent solution #c can simultaneously satisfy the intent expectation #a and the intent expectation #b, the MnS producer is triggered to perform the following step S507a.

If no intent solution among the intent solution #a, the intent solution #b, and the intent solution #c can simultaneously satisfy the intent expectation #a and the intent expectation #b, the MnS producer is triggered to perform the following step S507b1.

S507a: The MnS producer selects, based on a solution selection policy #1, an intent solution to be executed.

It is assumed that the intent expectations expected by the intent solution #a and the intent solution #c can simultaneously satisfy the intent expectation #a and the intent expectation #b. In this case, the MnS producer may select, based on the priority policy information #a and the resource policy information #a, the intent solution to be executed.

For example, the intent expectation #a is to ensure user experience, and the expectation target #a1 is to ensure that a downlink rate of a cell #1 is greater than or equal to 10 Mb/s; the intent expectation #b is to save energy for the cell #1, the expectation target #b1 is to ensure that an energy efficiency target of the cell #1 is greater than or equal to 0.01 Mb/J, and the expectation target #b2 is to ensure that an energy consumption target of the cell #1 is less than or equal to 1000 J/S. In this case, the cell #1 is the expectation object #a.

It is assumed that the expectation target optimal performance value list #a includes: a downlink rate is equal to 10 Mb/s, an energy efficiency target is equal to 0.02 Mb/J, an energy consumption target is equal to 900 J/S, and a resource #a is 30 RBs; and the expectation target optimal performance value list #c includes: the downlink rate is equal to 15 Mb/s, the energy efficiency target is equal to 0.01 Mb/J, the energy consumption target is equal to 500 J/S, and the resource #c is 50 RBs. In this case, the MnS producer may select an intent solution with a high occupied resource amount and better fulfilling a high-priority intent expectation. In other words, the MnS producer may select an intent solution better fulfilling the expectation target #a1, and a resource amount occupied by the intent solution #c is greater than a resource amount occupied by the intent solution #a. That is, the MnS producer may select the intent solution #c as the intent solution to be executed.

S507b1: The MnS producer sends the pre-evaluation information #1 and the solution identifier to the MnS consumer.

It may be understood that, if no intent solution among the intent solution #a, the intent solution #b, and the intent solution #c can simultaneously satisfy the intent expectation #a and the intent expectation #b, the expectation target optimal performance value list #a, the expectation target optimal performance value list #b, and the expectation target optimal performance value list #c may mark an unfulfilled expectation target.

For example, it is assumed that the expectation target optimal performance value list #a includes: the downlink rate is equal to 5 Mb/s, the energy efficiency target is equal to 0.05 Mb/J, the energy consumption target is equal to 1500 J/S, and the resource #a is 25 RBs. In this case, the expectation target optimal performance value list #a may mark that the expectation target #a1 and the expectation target #b2 are not fulfilled. The expectation target optimal performance value list #b includes: the downlink rate is equal to 20 Mb/s, the energy efficiency target is equal to 0.05 Mb/J, the energy consumption target is equal to 1500 J/S, and a resource #b is 40 RBs. In this case, the expectation target optimal performance value list #b may mark that the expectation target #b2 is not fulfilled. The expectation target optimal performance value list #c includes: the downlink rate is equal to 15 Mb/s, the energy efficiency target is equal to 0.009 Mb/J, the energy consumption target is equal to 950 J/S, and the resource #c is 35 RBs. In this case, the expectation target optimal performance value list #c may mark that the expectation target #b1 is not fulfilled.

S507b2: The MnS consumer selects the intent solution to be executed.

The MnS consumer may select, based on the solution selection policy #a and an intent expectation preference of the MnS consumer, the intent solution to be executed from the intent solution #a, intent solution #b, and intent solution #c. For example, if the intent expectation preference of the MnS consumer is a solution with a better energy saving effect, the MnS consumer may select, with reference to the priority policy information #a, the resource policy information #a, and the intent expectation preference, the intent solution #b as the intent solution to be executed.

S507b3: The MnS consumer modifies the intent expression #a.

The MnS consumer may modify the intent expression #a based on the expectation target optimal performance value list #b of the intent solution #b selected in step S507b2. For example, the MnS consumer may modify the expectation target #b2 in the intent expression #a to the energy consumption target being less than or equal to 1500 J/S, so as to obtain a modified intent expression #a, which may be denoted as an intent expression #b.

S507b4: The MnS consumer sends the intent expression #b and a solution identifier #b to the MnS producer.

For example, the MnS consumer may feed back, to the MnS producer, that the intent solution to be executed is the intent solution #b. For example, a Near-RT RIC may indicate the intent solution b by feeding back the solution identifier #b.

S507b5: The MnS producer modifies the intent instance #a based on the intent expression #b.

S508: The MnS producer executes the intent solution to be executed.

For step S506, the MnS producer may execute the intent solution #a.

It may be understood that step S507a and steps S507b1-S507b2 are parallel solutions, and are applicable to different cases. For step S507a, the MnS producer may execute the intent solution #c. For steps S507b1-S507b2, the MnS producer may execute the intent solution #b. A specific implementation process of step S508 is not limited in this embodiment of this application.

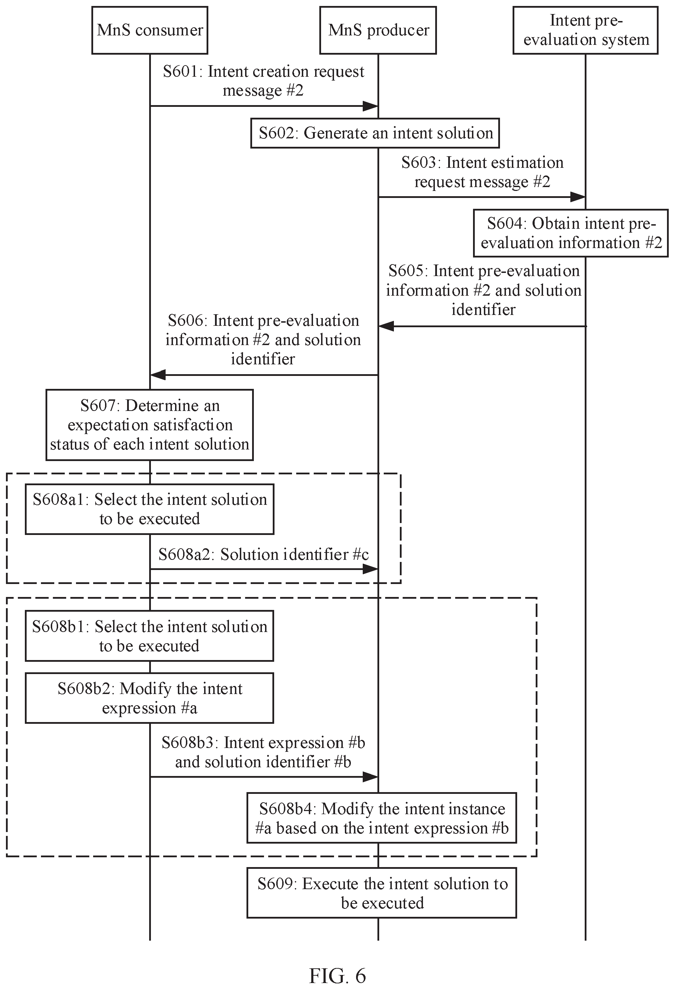

Scenario 2: FIG. 6 is a third schematic flowchart of a communication method according to an embodiment of this application. Interaction between an MnS consumer (for example, the foregoing second device), an MnS producer (for example, the foregoing first device), and an intent pre-evaluation system (for example, the foregoing third device) is mainly involved.

As shown in FIG. 6, the method may include the following steps.

S601: The MnS consumer (Consumer) sends an intent creation request message #2 to the MnS producer (Producer).

The intent creation request message #2 may include an intent expression #a.

The intent expression #a may be used to request to create an intent instance #a. The intent expression #a may include an intent expectation #a, an intent expectation #b, and an expectation object #a. The intent expectation #a may include an expectation target #a1, and the intent expectation #b may include an expectation target #b1 and an expectation target #b2. It is assumed that a priority of the intent expectation #a is higher than a priority of the intent expectation #b.

S602: The MnS producer generates an intent solution.

The MnS producer generates an intent solution #a, an intent solution #b, and an intent solution #c based on the intent expression #a.

S603: The MnS producer sends an intent estimation request message #2 to the intent pre-evaluation system.

The intent estimation request message #2 may include intent solutions (that is, the intent solution #a, the intent solution #b, and the intent solution #c), an intent expectation list (that is, the intent expectation #a and the intent expectation #b; or an expectation target #a1, an expectation target #b1, and an expectation target #b2), and expectation object information (that is, the expectation object #a).

S604: The intent pre-evaluation system obtains intent pre-evaluation information #2.

The intent pre-evaluation system may obtain related network configuration information and network and service indicator statistics values based on the expectation object #a, and pre-evaluate the intent solution #a, the intent solution #b, and the intent solution #c, to obtain the intent pre-evaluation information #2.

For example, the intent pre-evaluation information #2 may include sub-intent pre-evaluation information #a, sub-intent pre-evaluation information #b, and sub-intent pre-evaluation information #c. The sub-intent pre-evaluation information #a may include the intent solution #a, an intent satisfaction status #a, an expectation target optimal performance value list #a, a resource amount #a, and time #a. The sub-intent pre-evaluation information #b may include the intent solution #b, an intent satisfaction status #b, an expectation target optimal performance value list #b, a resource amount #b, and time #b. The sub-intent pre-evaluation information #c may include the intent solution #c, an intent satisfaction status #c, an expectation target optimal performance value list #c, a resource amount #c, and time #c.

S605: The intent pre-evaluation system sends the intent pre-evaluation information #2 and a solution identifier to the MnS producer.

The intent pre-evaluation system may send the sub-intent pre-evaluation information #a, the sub-intent pre-evaluation information #b, and the sub-intent pre-evaluation information #c to the MnS producer.

A quantity of intent identifiers is in a one-to-one correspondence with a quantity of the foregoing intent solutions. In other words, the intent pre-evaluation system sends three solution identifiers to the MnS producer: a solution identifier #a, a solution identifier #b, and a solution identifier #c, respectively. The solution identifier #a may correspond to the intent solution #a and the sub-intent pre-evaluation information #a; the solution identifier #b may correspond to the intent solution #b and the sub-intent pre-evaluation information #b; and the solution identifier #c may correspond to the intent solution #c and the sub-intent pre-evaluation information #c.

It may be understood that if only one intent solution among the intent solution #a, the intent solution #b, and the intent solution #c can simultaneously satisfy the intent expectation #a and the intent expectation #b, for example, the intent solution #a, the MnS producer may directly select the intent solution #a as an intent solution to be executed.

It should be understood that an implementation process of steps S601 to S605 is similar to an implementation process of steps S501 to S505. References may be made for understanding, and details are not described.

S606: The MnS producer sends the pre-evaluation information #2 and the solution identifier to the MnS consumer.

It may be understood that, if no intent solution among the intent solution #a, the intent solution #b, and the intent solution #c can simultaneously satisfy the intent expectation #a and the intent expectation #b, the expectation target optimal performance value list #a, the expectation target optimal performance value list #b, and the expectation target optimal performance value list #c may mark an unfulfilled expectation target.

S607: The MnS consumer determines an expectation satisfaction status of each intent solution.

If the expected intent expectation of the intent solution can simultaneously satisfy the intent expectation #a and the intent expectation #b, it may indicate that the intent solution can satisfy all intent expectations. On the contrary, it may indicate that the intent solution cannot satisfy all intent expectations. For example, a fulfillment effect of the expected intent expectation of the intent solution can satisfy the intent expectation #a or the intent expectation #b, or a fulfillment effect of the expected intent solution does not satisfy the intent expectation #a and the intent expectation #b.

If at least two intent solutions among the intent solution #a, the intent solution #b, and the intent solution #c can simultaneously satisfy the intent expectation #a and the intent expectation #b, the MnS producer is triggered to perform the following step S608a1.

If no intent solution among the intent solution #a, the intent solution #b, and the intent solution #c can simultaneously satisfy the intent expectation #a and the intent expectation #b, the MnS producer is triggered to perform the following step S608b1.

S608a1: The MnS producer selects the intent solution to be executed.

It is assumed that the intent solution #a and the intent solution #c can simultaneously satisfy the intent expectation #a and the intent expectation #b. In this case, the MnS producer may select, based on an intent expectation preference of the MnS producer, the intent solution to be executed.

For example, it is assumed that the expectation target optimal performance value list #a includes: a downlink rate is equal to 10 Mb/s, an energy efficiency target is equal to 0.02 Mb/J, an energy consumption target is equal to 900 J/S, and a resource #a is 30 RBs; and the expectation target optimal performance value list #c includes: the downlink rate is equal to 15 Mb/s, the energy efficiency target is equal to 0.01 Mb/J, the energy consumption target is equal to 500 J/S, and a resource #c is 50 RBs. In this case, the MnS consumer may select, based on the intent expectation preference of the MnS consumer such as a solution whose intent expectation preference is a better energy saving effect, the intent solution #c as the intent solution to be executed.

It may be understood that, if the MnS producer stores a solution selection policy, for example, the solution selection policy #a in step S601, the MnS consumer may select, with reference to the intent expectation preference of the MnS consumer and the solution selection policy #a, the intent solution to be executed. An implementation principle thereof is similar to that of step S507b2. References may be made for understanding, and details are not described.

S608a2: The MnS consumer sends the solution identifier #c to the MnS producer.

S608b1: The MnS producer selects the intent solution to be executed.

If no intent solution among the intent solution #a, the intent solution #b, and the intent solution #c can simultaneously satisfy the intent expectation #a and the intent expectation #b, the expectation target optimal performance value list #a, the expectation target optimal performance value list #b, and the expectation target optimal performance value list #c may mark an unfulfilled expectation target.

For example, it is assumed that the expectation target optimal performance value list #a includes: the downlink rate is equal to 5 Mb/s, the energy efficiency target is equal to 0.05 Mb/J, the energy consumption target is equal to 1500 J/S, and the resource #a is 25 RBs. In this case, the expectation target optimal performance value list #a may mark that the expectation target #a1 and the expectation target #b2 are not fulfilled. The expectation target optimal performance value list #b includes: the downlink rate is equal to 20 Mb/s, the energy efficiency target is equal to 0.05 Mb/J, the energy consumption target is equal to 1500 J/S, and the resource #b is 40 RBs. In this case, the expectation target optimal performance value list #b may mark that the expectation target #b2 is not fulfilled. The expectation target optimal performance value list #c includes: the downlink rate is equal to 15 Mb/s, the energy efficiency target is equal to 0.009 Mb/J, the energy consumption target is equal to 950 J/S, and the resource #b is 35 RBs. In this case, the expectation target optimal performance value list #c may mark that the expectation target #b1 is not fulfilled.

The MnS consumer may select, based on the intent expectation preference of the MnS consumer such as a solution whose intent expectation preference is a better energy saving effect, the intent solution #b as the intent solution to be executed.

Similarly, if the MnS producer stores a solution selection policy, for example, the solution selection policy #a in step S601, the MnS consumer may select, with reference to the intent expectation preference of the MnS consumer and the solution selection policy #a, the intent solution to be executed. An implementation principle thereof is similar to that of step S507b2. References may be made for understanding, and details are not described.

S608b2: The MnS consumer modifies the intent expression #a.

The MnS consumer may modify the intent expression #a based on the expectation target optimal performance value list #b of the intent solution #b selected in step S608b1. For example, the MnS consumer may modify the expectation target #b2 in the intent expression #a to the energy consumption target being less than or equal to 1500 J/S, so as to obtain a modified intent expression #a, which may be denoted as an intent expression #b.

S608b3: The MnS consumer sends the intent expression #b and a solution identifier #b to the MnS producer.

S608b4: The MnS producer modifies the intent instance #a based on the intent expression #b.

S609: The MnS producer executes the intent solution to be executed.

For step S605, the MnS producer may execute the intent solution #a. It may be understood that steps S608a1-S608a2 and steps S608b1-S608b4 are parallel solutions, and are applicable to different cases. For steps S608a1-S608a2, the MnS producer may execute the intent solution #c. For steps S608b1-S608b4, the MnS producer may execute the intent solution #b. A specific implementation process of step S609 is not limited in this embodiment of this application.

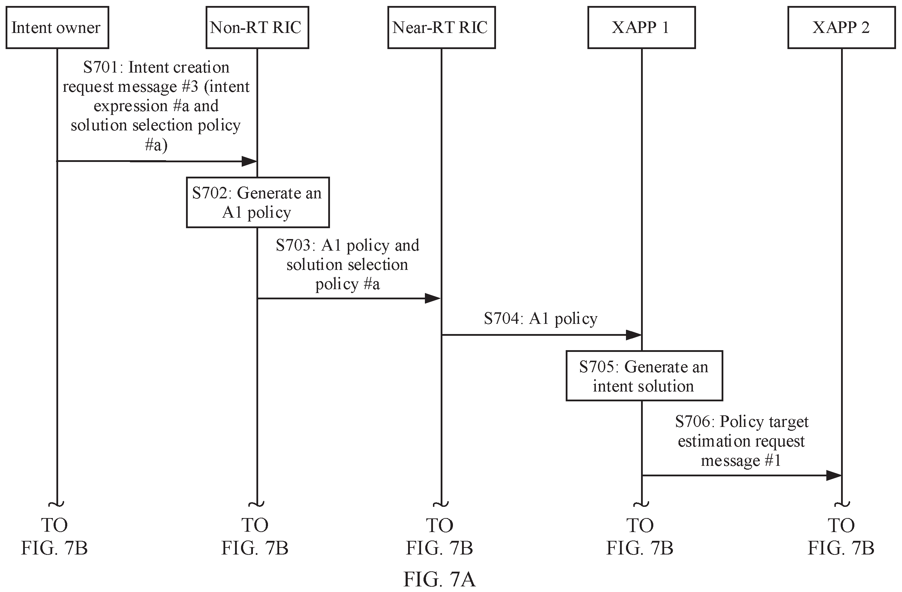

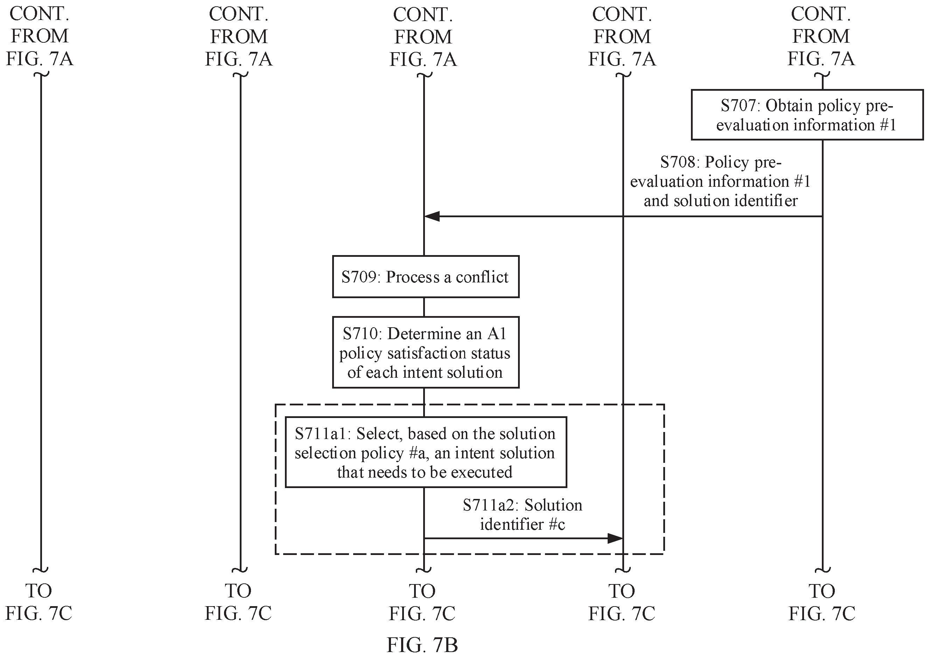

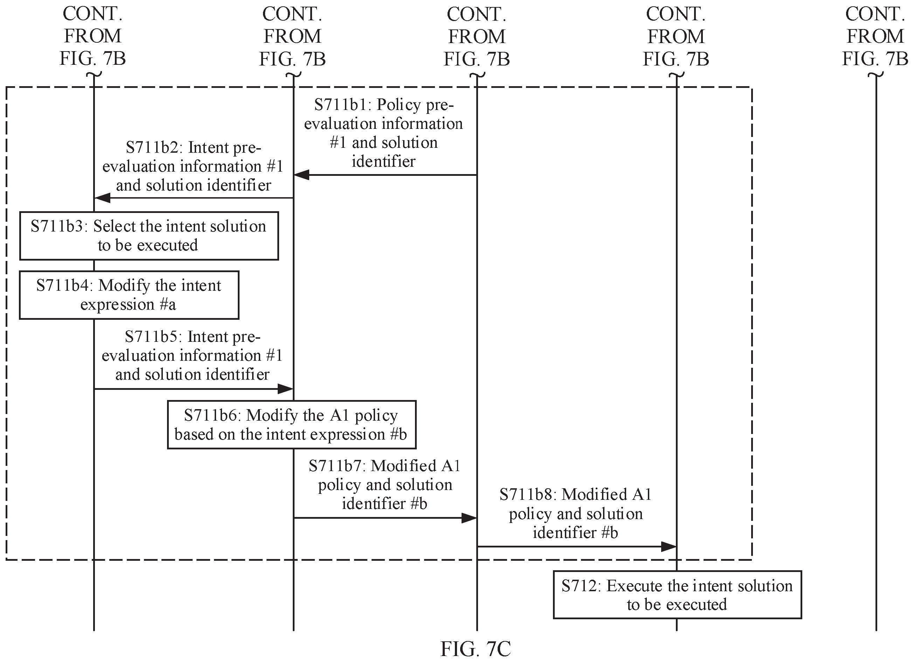

Scenario 3: FIG. 7A to FIG. 7C are a fourth schematic flowchart of a communication method according to an embodiment of this application. Interaction between an intent owner (for example, the foregoing second device), a Non-RT RIC (for example, the foregoing first functional entity), a Near-RT RIC (for example, the foregoing second functional entity), an XAPP 1 (for example, the foregoing first application), and an XAPP 2 (for example, the foregoing third device) is mainly involved. It may be understood that the Non-RT RIC, the Near-RT RIC, and the XAPP 1 jointly constitute the first device, and the XAPP 1 and the XAPP 2 are applications running on the Near-RT RIC.

As shown in FIG. 7A to FIG. 7C, the method may include the following steps.

S701: The intent owner sends an intent creation request message #3 to the Non-RT RIC.

The intent creation request message #3 may include an intent expression #a and a solution selection policy #a. The intent expression #a may be used to request to create an intent instance #a. The intent expression #a may include an intent expectation #a, an intent expectation #b, and an expectation object #a. The intent expectation #a may include an expectation target #a1, and the intent expectation #b may include an expectation target #b1 and an expectation target #b2. It is assumed that a priority of the intent expectation #a is higher than a priority of the intent expectation #b.

The solution selection policy #a may be used by the MnS producer to select an intent solution to be executed, and the solution selection policy #a may include priority policy information #a and resource policy information #a. The priority policy information #a may be ensuring a high-priority intent expectation, and the resource policy information #a may be a high available resource amount.

S702: The Non-RT RIC generates an A1 policy.

The Non-RT RIC may generate the A1 policy based on the received intent expression #a. That is, the Non-RT RIC may generate the corresponding A1 policy based on the intent expectation #a (expectation target #a1), the intent expectation #b (the expectation target #b1 and the expectation target #b2), and the expectation object #a.

The A1 policy is in a declarative policy expression form, and the A1 policy may include a policyTypeId, a policyId, and a policyObject. For specific descriptions, refer to descriptions of the foregoing technical terms. Details are not described again.

S703: The Non-RT RIC sends the A1 policy and the solution selection policy #a to the Near-RT RIC.

S704: The Near-RT RIC sends the A1 policy to the XAPP 1.

The Near-RT RIC may store the solution selection policy #a, so as to subsequently select a solution to be executed. The Near-RT RIC may select an appropriate XAPP, for example, the XAPP 1, based on content of the A1 policy, and send the A1 policy to the XAPP 1.

S705: The XAPP 1 generates an intent solution.

The XAPP 1 may translate the received A1 policy to generate an intent solution, where the intent solution may be a control message for an E2 node. For example, the XAPP 1 may generate an intent solution #a, an intent solution #b, and an intent solution #c based on the A1 policy.

S706: The XAPP 1 sends a policy target estimation request message #1 to the XAPP 2.

The XAPP 2 may be a digital twin system, a knowledge base, or an application of an AI model with a pre-evaluation function.

The policy target estimation request message #3 may include intent solutions (that is, the intent solution #a, the intent solution #b, and the intent solution #c), an A1 policy target list, and A1 policy object information.

It may be understood that, the policyObject may include an application scope of the policy A1, a target of the policy A1, and a resource of the policy A1. The A1 policy target list is determined based on the target of the policy A1, and may include all policy targets of the policy A1. The A1 policy object information includes the application scope of the policy A1. For example, the A1 policy object information may be executed E2 node information.

S707: The XAPP 2 obtains policy pre-evaluation information #1.

The intent pre-evaluation system may obtain related network configuration information and network and service indicator statistics values based on the A1 policy object information, and pre-evaluate the intent solution #a, the intent solution #b, and the intent solution #c, to obtain the policy pre-evaluation information #1.

The policy pre-evaluation information #1 may include an A1 policy satisfaction status of each intent solution, an optimal policy target value of estimating a policy target of the A1 policy during execution of each intent solution, a resource amount used when each policy target achieves the optimal policy target value during execution of each intent solution, and time occupied when each policy target achieves the optimal policy target value during execution of each intent solution. The A1 policy satisfaction status of each intent solution may be: whether an expected policy target during execution of each intent solution can simultaneously satisfy all policy targets of the A1 policy.

For example, the policy pre-evaluation information #1 may include sub-policy pre-evaluation information #a, sub-policy pre-evaluation information #b, and sub-policy pre-evaluation information #c. The sub-policy pre-evaluation information #a may include the intent solution #a, an A1 policy satisfaction status #a, a policy target optimal performance value list #a, a resource amount #a, and time #a. The sub-policy pre-evaluation information #b may include the intent solution #b, an A1 policy satisfaction status #b, a policy target optimal performance value list #b, a resource amount #b, and time #b. The sub-policy pre-evaluation information #c may include the intent solution #c, an A1 policy satisfaction status #c, a policy target optimal performance value list #c, a resource amount #c, and time #c.

S708: The XAPP 2 sends the policy pre-evaluation information #1 and a solution identifier to the Near-RT RIC.

The XAPP 2 may send the sub-policy pre-evaluation information #a, the sub-policy pre-evaluation information #b, and the sub-policy pre-evaluation information #c to the Near-RT RIC.

A quantity of solution identifiers is in a one-to-one correspondence with a quantity of the foregoing intent solutions. In other words, the XAPP 2 sends three solution identifiers to the Near-RT RIC: a solution identifier #a, a solution identifier #b, and a solution identifier #c. The solution identifier #a may correspond to the intent solution #a and the sub-policy pre-evaluation information #a; the solution identifier #b may correspond to the intent solution #b and the sub-policy pre-evaluation information #b; and the solution identifier #c may correspond to the intent solution #c and the sub-policy pre-evaluation information #c.

S709: The Near-RT RIC processes a conflict.

The Near-RT RIC can process the conflict and eliminate an intent solution that affects fulfillment of another A1 policy.

S710: The Near-RT RIC determines an A1 policy satisfaction status of each intent solution.

If the expected policy target of the intent solution can satisfy all policy targets of the A1 policy, it may indicate that the intent solution can satisfy all intent expectations. Otherwise, it may indicate that the intent solution cannot satisfy all intent expectations. For example, the expected policy target of the intent solution can only partly satisfy the policy targets of the A1 policy, or does not satisfy any policy target of the A1 policy.

If at least two intent solutions among the intent solution #a, the intent solution #b, and the intent solution #c can satisfy all the policy targets of the policy A1, the Near-RT RIC is triggered to perform the following step S711a1.

If no intent solution among the intent solution #a, the intent solution #b, and the intent solution #c can satisfy all the policy targets of the policy A1, the Near-RT RIC is triggered to perform the following step S711b1.

S711a1: The Near-RT RIC selects, based on the solution selection policy #a, an intent solution to be executed.

It is assumed that the intent solution #a and the intent solution #c can simultaneously satisfy all the policy targets of the A1 policy. In this case, the Near-RT RIC may select, based on the priority policy information #a and the resource policy information #a, the intent solution to be executed. For example, the Near-RT RIC may select the intent solution #c as the intent solution to be executed. An implementation principle thereof is similar to that of step S507a. References may be made for understanding, and details are not described.

S711a2: The Near-RT RIC sends the solution identifier #c to the XAPP 1.

The Near-RT RIC may feed back, to the XAPP 1, that the intent solution to be executed is the intent solution #c. For example, the Near-RT RIC may indicate the intent solution #c by feeding back the solution identifier #c.

S711b1: The Near-RT RIC sends the policy pre-evaluation information #1 and the solution identifier to the Non-RT RIC.

S711b2: The Non-RT RIC sends intent pre-evaluation information #1 and the solution identifier to the intent owner.

The Non-RT RIC may translate the policy pre-evaluation information #1 into corresponding intent pre-evaluation information #1. That is, the Non-RT RIC may translate the sub-policy pre-evaluation information #a into corresponding sub-intent pre-evaluation information #a, the sub-policy pre-evaluation information #b into corresponding sub-intent pre-evaluation information #b, and the sub-policy pre-evaluation information #c into corresponding sub-intent pre-evaluation information #c.

The sub-intent pre-evaluation information #a may include the intent solution #a, an intent satisfaction status #a, an expectation target optimal performance value list #a, a resource amount #a, and time #a. The sub-intent pre-evaluation information #b may include the intent solution #b, an intent satisfaction status #b, an expectation target optimal performance value list #b, a resource amount #b, and time #b. The sub-intent pre-evaluation information #c may include the intent solution #c, an intent satisfaction status #c, an expectation target optimal performance value list #c, a resource amount #c, and time #c.

It may be understood that, if no intent solution among the intent solution #a, the intent solution #b, and the intent solution #c can simultaneously satisfy the intent expectation #a and the intent expectation #b, the optimal performance value list #a, the optimal performance value list #b, and the optimal performance value list #c may mark an unfulfilled expectation target.

S711b3: The intent owner selects the intent solution to be executed.

The intent owner may select, based on the solution selection policy #a and an intent expectation preference of the intent owner, the intent solution to be executed from the intent solution #a, intent solution #b, and intent solution #c. For example, if the intent expectation preference of the intent owner is a solution with a better energy saving effect, the intent owner may select, with reference to the priority policy information #a, the resource policy information #a, and the intent expectation preference, the intent solution #b as the intent solution to be executed.

S711b4: The intent owner modifies the intent expression #a.

The intent owner may modify the intent expression #a based on the expectation target optimal performance value list #b of the intent solution #b selected in step S711b3, so as to obtain a modified intent expression #a, which may be denoted as an intent expression #b.

It may be understood that an implementation principle of this process is similar to that of step S507b3. References may be made for understanding, and details are not described.

S711b5: The intent owner sends the intent expression #b and the solution identifier #b to the Non-RT RIC.

The intent owner may feed back, to the Non-RT RIC, that the intent solution to be executed is the intent solution #b. For example, the intent owner may indicate the intent solution #b by feeding back the solution identifier #b.

S711b6: The Non-RT RIC modifies the A1 policy based on the intent expression #b.

The Non-RT RIC may modify the A1 policy based on the intent expression #b to obtain a modified A1 policy.

S711b7: The Non-RT RIC sends the modified A1 policy and the solution identifier #b to the Near-RT RIC.

S711b8: The Near-RT RIC sends the modified A1 policy and the solution identifier #b to the XAPP 1.

S712: The XAPP 1 executes the intent solution to be executed.

It may be understood that steps S711a1-S711a2 and S711b1-S711b7 are parallel solutions, and are applicable to different cases. For steps S711a1-S711a2, the XAPP 1 may execute the intent solution #c. For example, the XAPP 1 may deliver corresponding control information #c to the E2 node based on the intent solution #c. For another example, for steps S711b1-S711b8, the XAPP 1 may execute the intent solution #b. For example, the XAPP 1 may deliver corresponding control information #b to the node E2 based on the intent solution #b.

It may be understood that a specific implementation process of step S712 is not limited in this embodiment of this application.

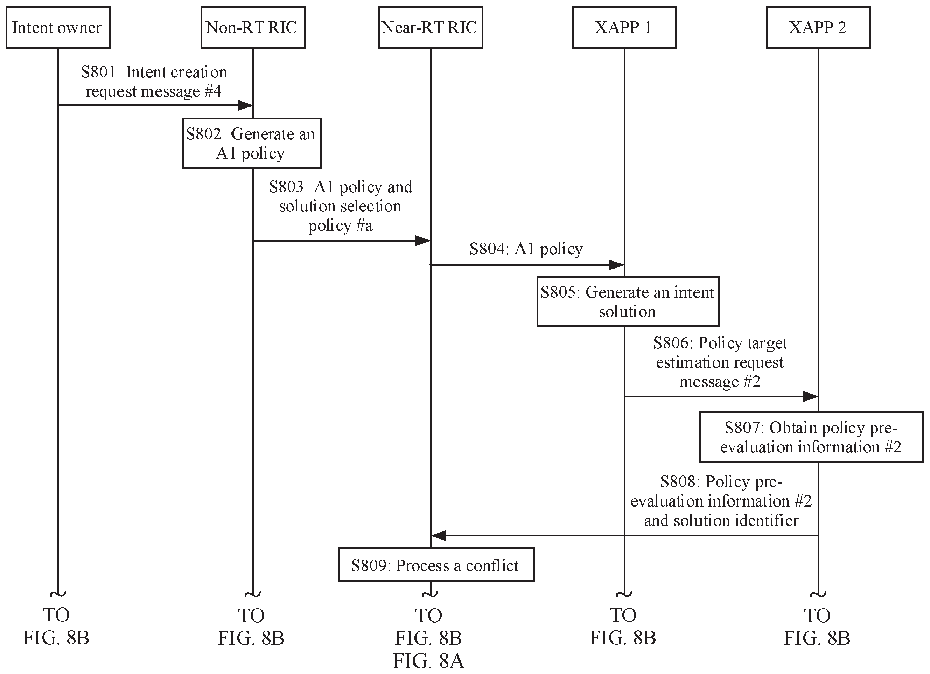

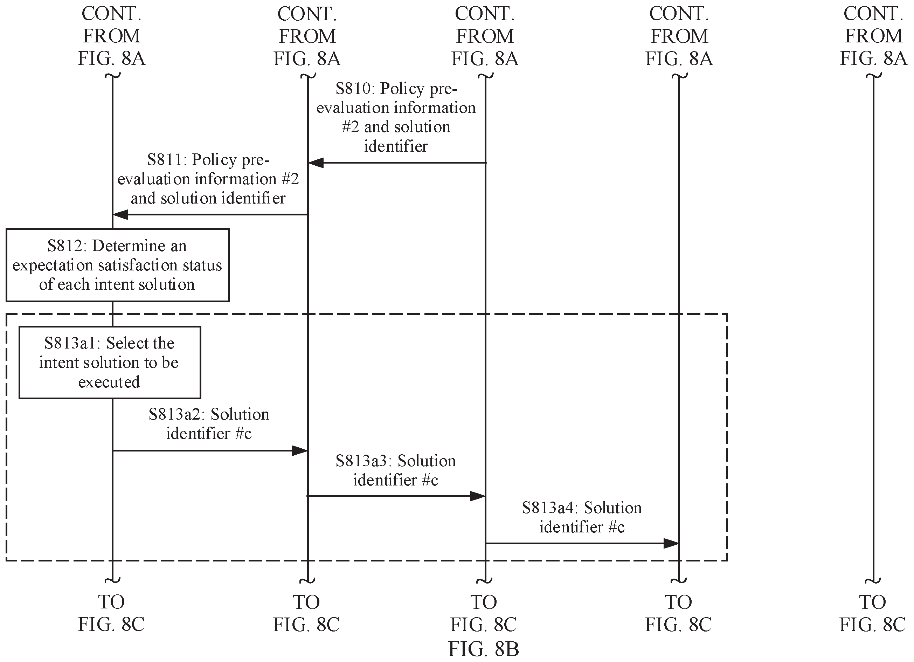

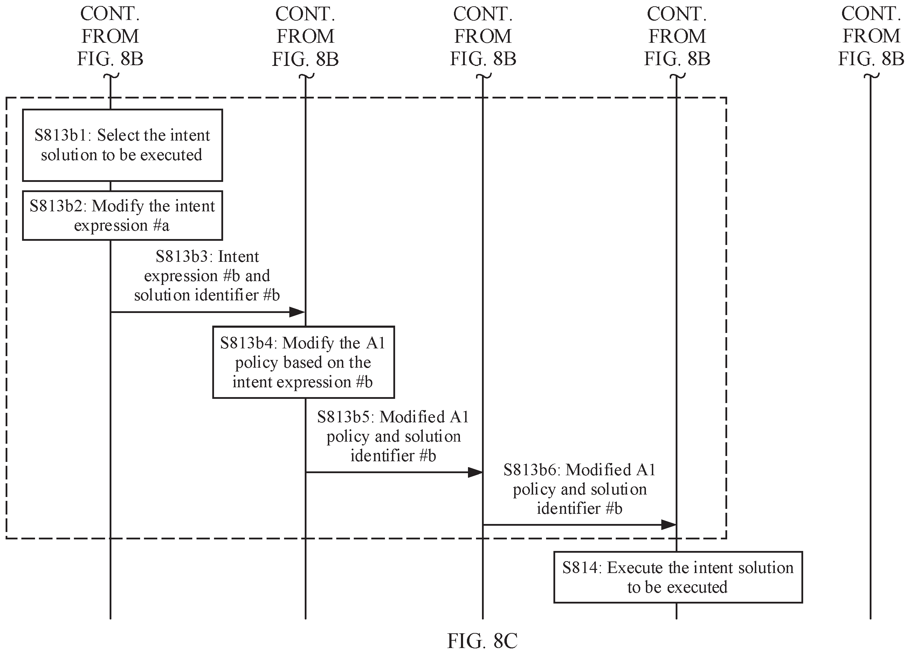

Scenario 4: FIG. 8A to FIG. 8C are a fifth schematic flowchart of a communication method according to an embodiment of this application. Interaction between an intent owner (for example, the foregoing second device), a Non-RT RIC (for example, the foregoing first functional entity), a Near-RT RIC (for example, the foregoing second functional entity), an XAPP 1 (for example, the foregoing first application), and an XAPP 2 (for example, the foregoing third device) is mainly involved. It may be understood that the Non-RT RIC, the Near-RT RIC, and the XAPP 1 jointly constitute the first device, and the XAPP 1 and the XAPP 2 are applications running on the Near-RT RIC.

As shown in FIG. 8A to FIG. 8C, the method may include the following steps.

S801: The intent owner sends an intent creation request message #4 to the Non-RT RIC.

The intent creation request message #4 may include an intent expression #a. The intent expression #a may be used to request to create an intent instance #a. The intent expression #a may include an intent expectation #a, an intent expectation #b, and an expectation object #a. The intent expectation #a may include an expectation target #a1, and the intent expectation #b may include an expectation target #b1 and an expectation target #b2. It is assumed that a priority of the intent expectation #a is higher than a priority of the intent expectation #b.

S802: The Non-RT RIC generates an A1 policy.

The Non-RT RIC may generate the A1 policy based on the received intent expression #a. That is, the Non-RT RIC may generate the corresponding A1 policy based on the intent expectation #a (expectation target #a1), the intent expectation #b (the expectation target #b1 and the expectation target #b2), and the expectation object #a.

The A1 policy is in a declarative policy expression form, and the A1 policy may include a policyTypeId, a policyId, and a policyObject. For specific descriptions, refer to descriptions of the foregoing technical terms. Details are not described again.

S803: The Non-RT RIC sends the A1 policy to the Near-RT RIC.

S804: The Near-RT RIC sends the A1 policy to the XAPP 1.

The Near-RT RIC may select an appropriate XAPP, for example, the XAPP 1, based on content of the A1 policy, and send the A1 policy to the XAPP 1.

S805: The XAPP 1 generates an intent solution.

The XAPP 1 may translate the received A1 policy to generate an intent solution, where the intent solution may be a control message for an E2 node. For example, the XAPP 1 may generate an intent solution #a, an intent solution #b, and an intent solution #c based on the A1 policy.

S806: The XAPP 1 sends a policy target estimation request message #2 to the XAPP 2.

The XAPP 2 may be a digital twin system, a knowledge base, or an application of an AI model with a pre-evaluation function.

The policy target estimation request message #2 may include intent solutions (that is, the intent solution #a, the intent solution #b, and the intent solution #c), an A1 policy target list, and A1 policy object information.

It may be understood that, the policyObject may include an application scope of the policy A1, a target of the policy A1, and a resource of the policy A1. The A1 policy target list is determined based on the target of the policy A1, and may include all policy targets of the policy A1. The A1 policy object information includes the application scope of the policy A1. For example, the A1 policy object information may be executed E2 node information.

S807: The XAPP 2 obtains policy pre-evaluation information #2.

The intent pre-evaluation system may obtain related network configuration information and network and service indicator statistics values based on the A1 policy object information, and pre-evaluate the intent solution #a, the intent solution #b, and the intent solution #c, to obtain the policy pre-evaluation information #2.

For example, the policy pre-evaluation information #2 may include sub-policy pre-evaluation information #a, sub-policy pre-evaluation information #b, and sub-policy pre-evaluation information #c. The sub-policy pre-evaluation information #a may include the intent solution #a, an A1 policy satisfaction status #a, a policy target optimal performance value list #a, a resource amount #a, and time #a. The sub-policy pre-evaluation information #b may include the intent solution #b, an A1 policy satisfaction status #b, a policy target optimal performance value list #b, a resource amount #b, and time #b. The sub-policy pre-evaluation information #c may include the intent solution #c, an A1 policy satisfaction status #c, a policy target optimal performance value list #c, a resource amount #c, and time #c.

S808: The XAPP 2 sends the policy pre-evaluation information #2 and the solution identifier to the Near-RT RIC.

The XAPP 2 may send the sub-policy pre-evaluation information #a, the sub-policy pre-evaluation information #b, and the sub-policy pre-evaluation information #c to the Near-RT RIC.

A quantity of solution identifiers is in a one-to-one correspondence with a quantity of the foregoing intent solutions. In other words, the XAPP 2 sends three solution identifiers to the Near-RT RIC: a solution identifier #a, a solution identifier #b, and a solution identifier #c. The solution identifier #a may correspond to the intent solution #a and the sub-policy pre-evaluation information #a; the solution identifier #b may correspond to the intent solution #b and the sub-policy pre-evaluation information #b; and the solution identifier #c may correspond to the intent solution #c and the sub-policy pre-evaluation information #c.

S809: The Near-RT RIC processes a conflict.

The Near-RT RIC can process the conflict and eliminate an intent solution that affects fulfillment of another A1 policy.

S810: The Near-RT RIC sends the policy pre-evaluation information #1 and the solution identifier to the Non-RT RIC.

S811: The Non-RT RIC sends intent pre-evaluation information #1 and the solution identifier to the intent owner.

The Non-RT RIC may translate the policy pre-evaluation information #1 into corresponding intent pre-evaluation information #1. That is, the Non-RT RIC may translate the sub-policy pre-evaluation information #a into corresponding sub-intent pre-evaluation information #a, the sub-policy pre-evaluation information #b into corresponding sub-intent pre-evaluation information #b, and the sub-policy pre-evaluation information #c into corresponding sub-intent pre-evaluation information #c.

The sub-intent pre-evaluation information #a may include the intent solution #a, an intent satisfaction status #a, an expectation target optimal performance value list #a, a resource amount #a, and time #a. The sub-intent pre-evaluation information #b may include the intent solution #b, an intent satisfaction status #b, an expectation target optimal performance value list #b, a resource amount #b, and time #b. The sub-intent pre-evaluation information #c may include the intent solution #c, an intent satisfaction status #c, an expectation target optimal performance value list #c, a resource amount #c, and time #c.

S812: The intent owner determines an expectation satisfaction status of each intent solution.

If at least two intent solutions among the intent solution #a, the intent solution #b, and the intent solution #c can simultaneously satisfy the intent expectation #a and the intent expectation #b, the intent owner is triggered to perform the following step S813a1.

If no intent solution among the intent solution #a, the intent solution #b, and the intent solution #c can simultaneously satisfy the intent expectation #a and the intent expectation #b, the intent owner is triggered to perform the following step S813b1.

S813a1: The intent owner selects the intent solution to be executed.

It is assumed that the intent solution #a and the intent solution #c can simultaneously satisfy the intent expectation #a and the intent expectation #b. In this case, the intent owner may select, based on an intent expectation preference of the intent owner, the intent solution to be executed, for example, the intent solution #c.

It may be understood that, if the intent owner stores a solution selection policy, for example, the solution selection policy #a in step S601, the intent owner may select, with reference to the intent expectation preference of the intent owner and the solution selection policy #a, the intent solution to be executed. An implementation principle thereof is similar to that of step S507b2. References may be made for understanding, and details are not described.

S813a2: The intent owner sends the solution identifier #c to the Non-RT RIC.

S813a3: The Non-RT RIC sends the solution identifier #c to the Near-RT RIC.

S813a4: The Near-RT RIC sends the solution identifier #c to the XAPP 1.

S813b1: The intent owner selects the intent solution to be executed.

If no intent solution among the intent solution #a, the intent solution #b, and the intent solution #c can simultaneously satisfy the intent expectation #a and the intent expectation #b, the expectation target optimal performance value list #a, the expectation target optimal performance value list #b, and the expectation target optimal performance value list #c may mark an unfulfilled expectation target.

The intent owner may select, based on the intent expectation preference of the intent owner, the intent solution to be executed from the intent solution #a, the intent solution #b, and the intent solution #c, for example, the solution identifier #b.

Similarly, if the intent owner stores a solution selection policy, for example, the solution selection policy #a in step S601, the intent owner may select, with reference to the intent expectation preference of the intent owner and the solution selection policy #a, the intent solution to be executed. An implementation principle thereof is similar to that of step S507b2. References may be made for understanding, and details are not described.

S813b2: The intent owner modifies the intent expression #a.

The intent owner may modify the intent expression #a based on the expectation target optimal performance value list #b of the intent solution #b selected in step S711b1, so as to obtain a modified intent expression #a, which may be denoted as an intent expression #b.

It may be understood that an implementation principle of this process is similar to that of step S507b3. References may be made for understanding, and details are not described.

S813b3: The intent owner sends the intent expression #b and a solution identifier #b to the Non-RT RIC.

S813b4: The Non-RT RIC modifies the A1 policy based on the intent expression #b.

S813b5: The Non-RT RIC sends the modified A1 policy and the solution identifier #b to the Near-RT RIC.

S813b6: The Near-RT RIC sends the modified A1 policy and the solution identifier #b to the XAPP 1.

S814: The XAPP 1 executes the intent solution to be executed.

It may be understood that steps S813a1-S813a4 and S813b1-S813b6 are parallel solutions, and are applicable to different cases. For steps S813a1-S813a4, the XAPP 1 may execute the intent solution #c. For example, the XAPP 1 may deliver corresponding control information #c to the E2 node based on the intent solution #c. For another example, for steps S813b1-S813b6, the XAPP 1 may execute the intent solution #b. For example, the XAPP 1 may deliver corresponding control information #b to the node E2 based on the intent solution #b.

It may be understood that a specific implementation process of step S814 is not limited in this embodiment of this application.

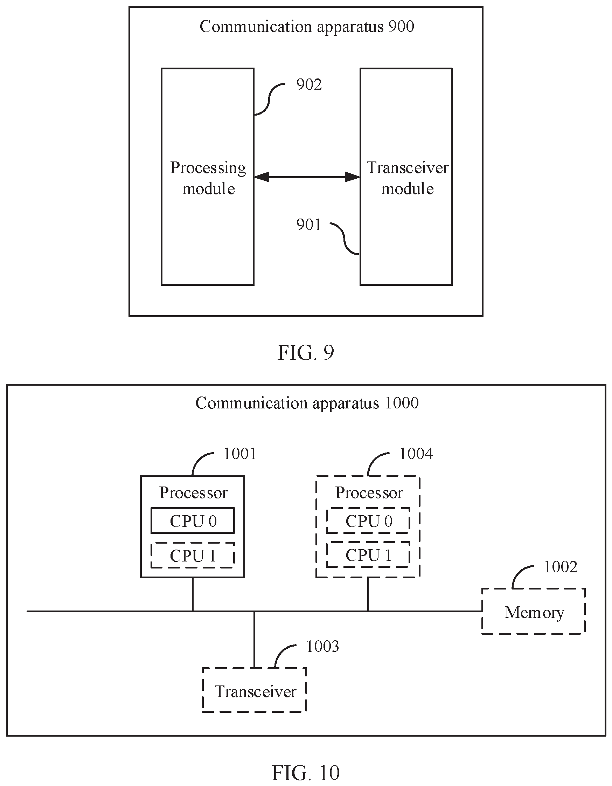

The communication method provided in embodiments of this application is described above in detail with reference to FIG. 4 to FIG. 8C. The following describes in detail a communication apparatus configured to perform the communication method provided in embodiments of this application with reference to FIG. 9 and FIG. 10.

FIG. 9 is a first diagram of a structure of a communication apparatus according to an embodiment of this application. For example, as shown in FIG. 9, the communication apparatus 900 includes a transceiver module 901 and a processing module 902. For ease of description, FIG. 9 shows only main parts of the communication apparatus.

The transceiver module 901 is configured to perform receiving and sending functions in the methods shown in FIG. 4 to FIG. 8C, and the processing module 902 is configured to perform a function in the methods shown in FIG. 4 to FIG. 8C other than the receiving and sending functions.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 can perform functions of the first device, the second device, or the third device in the methods shown in FIG. 4 to FIG. 8C.

It may be understood that the communication apparatus 900 may be a device (for example, the first device, the second device, or the third device), or may be a chip (system) or another part or component that may be disposed in the device, or may be an apparatus including the device. This is not limited in this embodiment of this application.

In addition, for technical effects of the communication apparatus 900, refer to the technical effects of the communication method shown above. Details are not described herein again.

FIG. 10 is a second diagram of a structure of a communication apparatus according to an embodiment. For example, the communication apparatus may be a terminal or a network device, or a chip (system) or another part or component that may be disposed in the terminal or the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following describes parts of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing unit, CPU), or may be an application-specific integrated circuit (application-specific integrated circuit, ASIC), or is configured as one or more integrated circuits that implement this embodiment, for example, one or more microprocessors (digital signal processor, DSP), or one or more field programmable gate arrays (field programmable gate array, FPGA).

Optionally, the processor 1001 may perform various functions of the communication apparatus 1000 by running or executing a software program stored in the memory 1002 and invoking data stored in the memory 1002, for example, perform the communication methods shown in FIG. 4 to FIG. 8C.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store the software program for performing the solution of this embodiment, and the processor 1001 controls the execution. For a specific implementation, refer to the foregoing method embodiments. Details are not described herein again.

Optionally, the memory 1002 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used for carrying or storing expected program code in a form of instructions or a data structure and can be accessed by a computer, but is not limited thereto. The memory 1002 may be integrated with the processor 1001, or may exist independently and is coupled to the processor 1001 through an interface circuit (not shown in FIG. 10) of the communication apparatus 1000. This is not specifically limited in this embodiment.

The transceiver 1003 is configured to communicate with another communication apparatus. For example, the communication apparatus 1000 is a terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000. This is not specifically limited in this embodiment.

It may be understood that the structure of the communication apparatus 1000 shown in FIG. 10 does not constitute a limitation on the communication apparatus. An actual communication apparatus may include more or fewer parts than those shown in the figure, combine some parts, or have different part arrangement.

In addition, for technical effects of the communication apparatus 1000, refer to the technical effects of the method in the foregoing method embodiments. Details are not described herein again.

It should be understood that, the processor in this embodiment may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in this embodiment may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, all or a part of the procedures or functions according to this embodiment are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this embodiment, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments. The execution sequences of the processes should be determined according to functions and internal logic of the processes, and should not be construed as any limitation on the implementation process of this embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this embodiment essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this embodiment, but is not intended to limit the protection scope of this embodiment. Any variation or replacement readily figured out by a person skilled in the art within the technical scope disclosed in this embodiment shall fall within the protection scope of this embodiment. Therefore, the protection scope of embodiments shall be subject to the protection scope of the claims.

## Claims

1. A communication method, comprising:
receiving, by a first device, a first request message from a second device, wherein the first request message is used to request to create a first intent instance, and the first intent instance comprises at least one intent expectation;
sending, by the first device, first information and a plurality of identifiers to the second device, wherein the first information indicates whether an estimated intent expectation during execution of each of a plurality of intent solutions satisfies each of the at least one intent expectation, the plurality of intent solutions are used to implement the first intent instance, and the plurality of identifiers are in a one-to-one correspondence with the plurality of intent solutions; and
receiving, by the first device, a first identifier from the second device, wherein the first identifier indicates an intent solution to be executed, and the first identifier is one of the plurality of identifiers.

2. The method according to claim 1, wherein the first information comprises first indication information and/or an expected value list, the first indication information indicates whether the estimated intent expectation during execution of each of the plurality of intent solutions satisfies each of the at least one intent expectation, and the expected value list indicates an expected target value of the estimated intent expectation during execution of each of the plurality of intent solutions.

3. The method according to claim 2, wherein the first information further comprises resource information and/or time information, wherein the resource information indicates a quantity of resources used to complete each of the plurality of intent solutions, and the time information indicates an amount of time used to complete each of the plurality of intent solutions.

4. The method according to any one of claims 1 to 3, wherein the first request message comprises a first intent expression, and the first intent expression is used to request to create the first intent instance.

5. The method according to any one of claims 1 to 4, wherein before the first device sends the first information and the plurality of identifiers to the second device, the method further comprises:
generating, by the first device, the plurality of intent solutions based on the first intent instance.

6. The method according to claim 5, wherein the method further comprises:
generating, by the first device, the first information based on the plurality of intent solutions.

7. The method according to claim 5, wherein the method further comprises:
sending, by the first device, a second request message to a third device, wherein the second request message comprises the plurality of intent solutions, and the second request message is used to request to obtain the estimated intent expectation during execution of each of the plurality of intent solutions; and
receiving, by the first device, the first information returned by the third device based on the second request message.

8. The method according to claim 7, wherein the second request message further comprises an expectation list and/or expectation object information, the expectation list indicates the at least one intent expectation, and the expectation object information indicates an object executing the first intent instance.

9. The method according to any one of claims 1 to 8, wherein the method further comprises:
determining, by the first device, a first intent solution based on the first identifier.

10. The method according to claim 9, wherein when estimated intent expectations during execution of at least two intent solutions among the plurality of intent solutions satisfy each of the at least one intent expectation, the first intent solution is one of the at least two intent solutions.

11. The method according to claim 9, wherein when no estimated intent expectation during execution of any one of the plurality of intent solutions satisfies each of the at least one intent expectation, the method further comprises:
receiving, by the first device, a second intent expression from the second device, wherein the second intent expression is determined based on an estimated intent expectation of the first intent solution.

12. The method according to claim 11, wherein the method further comprises:
modifying, by the first device, the first intent instance based on the second intent expression.

13. A communication method, comprising:
sending, by a second device, a first request message to a first device, wherein the first request message is used to request to create a first intent instance, and the first intent instance comprises at least one intent expectation;
receiving, by the second device, first information and a plurality of identifiers from the first device, wherein the first information indicates whether an estimated intent expectation during execution of each of a plurality of intent solutions satisfies each of the at least one intent expectation, the plurality of intent solutions are used to implement the first intent instance, and the plurality of identifiers are in a one-to-one correspondence with the plurality of intent solutions;
determining, by the second device, a first identifier based on the first information and the plurality of identifiers; and
sending, by the second device, the first identifier to the first device.

14. The method according to claim 13, wherein the first information comprises first indication information and/or an expected value list, the first indication information indicates whether the estimated intent expectation during execution of each of the plurality of intent solutions satisfies each of the at least one intent expectation, and the expected value list indicates an expected target value of the estimated intent expectation during execution of each of the plurality of intent solutions.

15. The method according to claim 14, wherein the first information further comprises resource information and/or time information, wherein the resource information indicates a quantity of resources used to complete each of the plurality of intent solutions, and the time information indicates an amount of time used to complete each of the plurality of intent solutions.

16. The method according to any one of claims 13 to 15, wherein the first request message comprises a first intent expression, and the first intent expression is used to request to create the first intent instance.

17. The method according to claim 16, wherein the first identifier corresponds to a first intent solution, and when estimated intent expectations during execution of at least two intent solutions among the plurality of intent solutions satisfy each of the at least one intent expectation, the first intent solution is one of the at least two intent solutions.

18. The method according to claim 16, wherein the first identifier corresponds to a first intent solution, and when no estimated intent expectation during execution of any one of the plurality of intent solutions satisfies each of the at least one intent expectation, the method further comprises:
generating, by the second device, a second intent expression based on an estimated intent expectation of the first intent solution; and
sending, by the second device, the second intent expression to the first device.

19. A communication method, comprising:
receiving, by a third device, a second request message from a first device, wherein the second request message comprises a plurality of intent solutions, and the second request message is used to request to obtain estimated intent expectations during execution of the plurality of intent solutions;
generating, by the third device, first information based on the second request message, wherein the first information indicates whether an estimated intent expectation during execution of each of the plurality of intent solutions satisfies each of at least one intent expectation, and the plurality of intent solutions are used to implement a first intent instance; and
sending, by the third device, the first information to the first device.

20. The method according to claim 19, wherein the second request message further comprises an expectation list and/or expectation object information, the expectation list indicates the at least one intent expectation, and the expectation object information indicates an object executing the first intent instance.

21. The method according to claim 19 or 20, wherein generating, by the third device, the first information based on the second request message comprises:
obtaining, by the third device based on the expectation object information, the estimated intent expectation during execution of each of the plurality of intent solutions; and
generating, by the third device, the first information based on the estimated intent expectation during execution of each of the intent solutions and the expectation list.

22. A communication method, comprising: performing, by a first device, the method according to any one of claims 1 to 12, and performing, by a second device, the method according to any one of claims 13 to 18.

23. A communication apparatus, wherein the apparatus comprises a module configured to perform the method according to any one of claims 1 to 21.

24. A communication apparatus, wherein the communication apparatus comprises a processor, and when the processor executes computer instructions, the communication apparatus is enabled to perform the method according to any one of claims 1 to 21.

25. A communication system, comprising an apparatus configured to perform the method according to any one of claims 1 to 12 and/or an apparatus configured to perform the method according to any one of claims 13 to 18.

26. A communication chip, wherein the communication chip stores instructions, and when the chip is run on a communication device, the method according to any one of claims 1 to 21 is implemented.

27. A computer-readable storage medium, wherein the computer-readable storage medium comprises a computer program or instructions, and when the computer program or the instructions are run on a computer, the computer is enabled to perform the method according to any one of claims 1 to 21.

28. A computer program product, wherein the computer program product comprises a computer program or instructions, and when the computer program or the instructions are run on a communication apparatus, the method according to any one of claims 1 to 21 is performed.
